# EUROPEAN PATENT APPLICATION

(11) **EP 4 823 201 A1**
(43) Date of publication of application: **14.10.2026**
(21) Application number: 24899739.7
(22) Date of filing: 29.11.2024
(51) Int. Cl.: H04W 72/0446

(54) **COMMUNICATION METHOD AND APPARATUS**

(30) Priority: 08.12.2023 RU 2023132340
(71) Applicant: Huawei Technologies Co., Ltd., Shenzhen, Guangdong 518129 (CN)
(72) Inventor: HU, Yuanzhou, Shenzhen, Guangdong 518129 (CN); WANG, Fan, Shenzhen, Guangdong 518129 (CN); MA, Jianglei, Shenzhen, Guangdong 518129 (CN)
(74) Representative: Huawei European IPR
(86) International application number: PCT/CN2024/135661
(87) International publication number: WO 2025/119099

(57) **Abstract**

This application provides a communication method and apparatus, relating to the field of communication technologies. The method includes: obtaining a first sequence, where the first sequence is for determining K₂ second resources from N₂ second resources, N₂ is a positive integer greater than or equal to K₂, each second resource corresponds to N₁ first resources, and K₂ is a positive integer; obtaining a first codebook, where the first codebook is for determining K₁×K₂ first resources from N₁×N₂ first resources, N₁ is a positive integer greater than or equal to K₁, the N₁×N₂ first resources are resources configured for data transmission, and K₁ is a positive integer; and transmitting data by using the K₁×K₂ first resources. Through adjustment of values of N₁, N₂, K₁, and K₂, sparsity of resources for data transmission can be flexibly configured, so that data packet sizes, code rates, or rates for sending data can be flexibly adjusted.

## Description

This application claims priority to Russian Patent Application No. 2023132340, filed with the Federal Service for Intellectual Property of the Russian Federation on December 8, 2023 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

Communication systems need to support simultaneous data transmission for a large quantity of terminal devices. However, resources for data transmission are inherently limited. A non-orthogonal multiple access (non-orthogonal multiple access, NoMA) technology allows for data transmission of a large quantity of terminal devices using limited resources in the presence of interference. In application scenarios of sparse code multiple access (sparse code multiple access, SCMA), different terminal devices may use different SCMA codebooks, and a codebook used by each terminal device indicates positions of sub-carriers selected from a plurality of sub-carriers (sub-carrier) and a modulation scheme applied to data transmitted on the selected sub-carriers. In other words, based on the SCMA codebook, K resources may be selected from N resources for transmission. A ratio between N and K may be referred to as sparsity, and both N and K are positive integers.

How to enable a communication system to flexibly configure sparsity of resources for data transmission is a problem to be urgently resolved.

### SUMMARY

This application provides a communication method and apparatus, so that a communication system can flexibly configure sparsity of resources for data transmission.

A first aspect provides a communication method. The method may be performed by a communication apparatus, or may be performed by a component (such as a processor, a chip, or a chip system) in a communication apparatus, or may be performed by a logic module or software that can implement all or some functions of a communication apparatus. The method includes: obtaining a first sequence, where the first sequence is for determining K₂ second resources from N₂ second resources, N₂ is a positive integer greater than or equal to K₂, each second resource corresponds to N₁ first resources, and K₂ is a positive integer; obtaining a first codebook, where the first codebook is for determining K₁×K₂ first resources from N₁×N₂ first resources, N₁ is a positive integer greater than or equal to K₁, the N₁×N₂ first resources are resources configured for data transmission, and K₁ is a positive integer; and transmitting data by using the K₁×K₂ first resources.

In the foregoing embodiment, a ratio between N₁ and K₁ reflects sparsity, and a ratio between N₂ and K₂ also reflects sparsity. Through adjustment of values of N₁, N₂, K₁, and K₂, sparsity of resources for data transmission can be flexibly configured, so that a data packet size, a code rate, or a rate for sending data can be flexibly adjusted. In addition, different terminal devices may correspond to different K₁ and K₂ values, so that different terminal devices can be supported to simultaneously send data with different sparsity and code rates.

In the foregoing embodiment, each second resource corresponds to N₁ first resources. Through construction of a nested relationship between the first resource and the second resource, interference in data transmission between different devices can be reduced. For example, different devices select respective K₂ second resources from N₂ second resources, and select K₁×K₂ first resources based on the respective K₂ second resources. This can effectively reduce a probability of overlap between resources selected by different devices, thereby controlling interference in data transmission between different devices, and flexibly supporting different quantities of devices.

With reference to the first aspect, in some implementations of the first aspect, the first codebook is for determining K₁ first resources from N₁ first resources corresponding to each second resource.

According to the foregoing embodiment, based on the first codebook, K₁ first resources may be determined from N₁ first resources. In this way, the communication apparatus can conveniently and flexibly determine K₁×K₂ first resources based on the first sequence and the first codebook.

With reference to the first aspect, in some implementations of the first aspect, the N₂ second resources include K₂ resource groups, and each of the K₂ resource groups includes a same quantity of second resources or a different quantity of second resources, where the first sequence is for determining the K₂ second resources respectively from the K₂ resource groups.

In the foregoing embodiment, each of K₂ resource groups may include a same quantity of second resources, so that the first sequence can be generated simply and conveniently. Each of K₂ resource groups may include a different quantity of second resources. In this way, K₂ may not be a factor of N₂, so that more values of N₂ and K₂ can be provided. The second resource includes the first resource, and a resource element in the first resource may be mapped to a sub-carrier (a sub-carrier for data transmission) in one or more resource blocks (resource block, RB) for data transmission. More values of N₂ and K₂ make it easier for a quantity of resource elements in the first resource to approach a quantity of sub-carriers in one or more RBs, thereby improving resource utilization.

With reference to the first aspect, in some implementations of the first aspect, N₂ = K₂, the first sequence includes N₂ elements, and the N₂ elements respectively correspond to the N₂ second resources.

According to the foregoing solution, the second resources may be non-sparse. In this way, a data transmission bandwidth can be ensured, and a data transmission rate can be increased. In addition, the first codebook may still be sparse, so that determining of sparsity of the first resources is not affected, retaining the characteristic of interference resistance.

With reference to the first aspect, in some implementations of the first aspect, obtaining the first sequence includes: obtaining an index of the first sequence; and determining the first sequence from a plurality of second sequences based on the index of the first sequence.

With reference to the first aspect, in some implementations of the first aspect, determining the first sequence from the plurality of second sequences includes: determining one second sequence from the plurality of second sequences, and determining the first sequence based on the second sequence. The index of the first sequence is an index of the second sequence in the plurality of second sequences.

With reference to the first aspect, in some implementations of the first aspect, determining the first sequence from the plurality of second sequences includes: determining one second sequence from the plurality of second sequences, and using the second sequence as the first sequence. The index of the first sequence is an index of the second sequence in the plurality of second sequences.

With reference to the first aspect, in some implementations of the first aspect, a quantity of same elements in any two of the plurality of second sequences is less than or equal to L, 0 ≤ L < K₂, and L is an integer. The plurality of second sequences may form a sequence set.

According to the foregoing solution, L may correspond to an upper limit of a quantity of same elements in two second sequences, so that L may represent an upper limit of a quantity of same second resources corresponding to two terminal devices, that is, represent an upper limit of a quantity of same second resources in K₂ second resources corresponding to each of the two terminal devices. When a value of L is small, a quantity of same second resources corresponding to the plurality of second sequences is small, resulting in good interference resistance for data transmission. Compared with a smaller value of L, a larger value of L allows for more sequences included in the sequence set, so that more terminal devices can be simultaneously supported to perform data transmission. Therefore, through configuration of L, interference resistance and application ranges of a plurality of terminal devices can be conveniently controlled. In addition, according to the foregoing solution, interference in data sent with different sparsity can be controlled.

With reference to the first aspect, in some implementations of the first aspect, the first sequence includes at least two of the plurality of second sequences.

According to the foregoing solution, the at least two sequences in the sequence set are concatenated into the first sequence, increasing a quantity of elements in the first sequence, so that the first sequence corresponds to a large quantity of second resources, thereby increasing a data transmission rate.

With reference to the first aspect, in some implementations of the first aspect, the plurality of second sequences satisfy: ${S}_{j} \left(k\right) = kP + \left({\sum }_{l = 0}^{L} {k}^{l} {i}_{l}\right) mod P ; {i}_{l} = 0 , 1 , … , P - 1 ; k = 0 , 1 , … , {K}_{2} - 1 .$$j = {\sum }_{l = 0}^{L} {P}^{l} {i}_{l}$*,* P = N₂/K₂, P is a positive integer, Sⱼ(k) represents a k^{th} element in a j^{th} second sequence of the plurality of second sequences, 0 ≤ L < K₂, and L is an integer. mod represents a modulo operation.

According to the foregoing embodiment, N₂ second resources may be evenly grouped into K₂ resource groups, and a plurality of second sequences may be easily generated according to the foregoing formula.

With reference to the first aspect, in some implementations of the first aspect, the plurality of second sequences satisfy: ${S}_{j} \left(k\right) = {\sum }_{p = - 1}^{k - 1} {P}_{p} + \left({\sum }_{l = 0}^{L} {k}^{l} {i}_{l}\right) mod {P}_{k} ; {i}_{l} = 0 , 1 , … , {P}_{l} - 1 ; k = 0 , 1 , … , {K}_{2} - 1 .$$j = {i}_{0} + {\sum }_{w = 1}^{L} \left({i}_{w}{\prod }_{p = 0}^{w - 1} {P}_{p}\right) , {N}_{2} = {\sum }_{k = 0}^{{K}_{2} - 1} {P}_{k}$, Pₖ is a positive integer, Sⱼ(k) represents a k^{th} element in a j^{th} second sequence of the plurality of second sequences, 0 ≤ L < K₂, and L is an integer.

According to the foregoing embodiment, N₂ second resources may be unevenly grouped into K₂ resource groups, and a plurality of second sequences may be easily generated according to the foregoing formula.

With reference to the first aspect, in some implementations of the first aspect, N₂ is related to a value of Pₖ, and Pₖ is for determining a quantity of second resources in each of the K₂ resource groups.

With reference to the first aspect, in some implementations of the first aspect, N₂ is related to a value of K₂.

With reference to the first aspect, in some implementations of the first aspect, the first codebook is determined based on an SCMA codebook.

According to the foregoing embodiment, the first codebook may be determined by using the SCMA codebook, and sparsity of first resources may be determined by adjusting SCMA sparsity, so that a code rate or a rate for sending data can be flexibly adjusted.

With reference to the first aspect, in some implementations of the first aspect, N₁ = K₁, and the first codebook includes at least two SCMA codebooks that are mutually orthogonal.

According to the foregoing solution, the first codebook includes a large quantity of first resources, thereby ensuring a data transmission bandwidth and increasing a data transmission rate.

With reference to the first aspect, in some implementations of the first aspect, obtaining the first codebook includes: obtaining an index of the first codebook; and determining the first codebook from a plurality of second codebooks based on the index of the first codebook. The plurality of second codebooks may form a codebook set.

With reference to the first aspect, in some implementations of the first aspect, determining the first codebook from the plurality of second codebooks includes: determining one second codebook from the plurality of second codebooks, and determining the first codebook based on the second codebook. The index of the first codebook is an index of the second codebook in the plurality of second codebooks.

With reference to the first aspect, in some implementations of the first aspect, determining the first codebook from the plurality of second codebooks includes: determining one second codebook from the plurality of second codebooks, and using the second codebook as the first codebook. The index of the first codebook is an index of the second codebook in the plurality of second codebooks.

A plurality of codebooks (which form a codebook set) and a plurality of sequences (which form a sequence set) are designed to support a plurality of terminal devices (different terminal devices may correspond to different combinations of codebooks and sequences). A quantity of codebooks (a quantity of second codebooks in the codebook set) and a quantity of sequences (a quantity of second sequences in the sequence set) are designed to vary with different service scenarios, to achieve adaptation.

With reference to the first aspect, in some implementations of the first aspect, the plurality of second codebooks are at least two SCMA codebooks that are mutually orthogonal.

According to the foregoing solution, the plurality of second codebooks are mutually orthogonal. In this way, the plurality of second codebooks correspond to different first resources, resulting in good interference resistance for data transmission.

With reference to the first aspect, in some implementations of the first aspect, each of the K₁×K₂ first resources includes W resource elements, where the transmitting the data by using the K₁×K₂ first resources includes: sending the data by using K₁×K₂×W resource elements, where W is a positive integer.

With reference to the first aspect, in some implementations of the first aspect, the method further includes: determining a first resource block group, where the first resource block group includes at least N₁×N₂×W resource elements, and N₁×N₂×W resource elements included in the N₁×N₂ first resources are in a one-to-one correspondence with N₁×N₂×W resource elements in the first resource block group.

With reference to the first aspect, in some implementations of the first aspect, the plurality of second sequences are determined based on an index of the first resource block group, and the index of the first resource block group is for determining a position of the first resource block group in at least one resource block group; and the at least one resource block group is a resource block group configured for data transmission, or the at least one resource block group is a resource block group contained in a system.

With reference to the first aspect, in some implementations of the first aspect, the plurality of second codebooks are determined based on an index of the first resource block group, and the index of the first resource block group is for determining a position of the first resource block group in at least one resource block group; and the at least one resource block group is a resource block group configured for data transmission, or the at least one resource block group is a resource block group contained in a system.

With reference to the first aspect, in some implementations of the first aspect, when at least one resource block group includes a resource block group configured for data transmission, data is transmitted in each of the at least one resource block group.

With reference to the first aspect, in some implementations of the first aspect, the plurality of second sequences are determined based on an index of the first resource block group, and the at least one resource block group is a resource block group included in a bandwidth part (bandwidth part, BWP), or the at least one resource block group is a maximum quantity of resource block groups that can be configured for data transmission.

With reference to the first aspect, in some implementations of the first aspect, the plurality of second sequences are determined based on an index of the first resource block group, and a resource element included in the at least one resource block group is a resource element included in a system, or a resource element included in the at least one resource block group is a resource element included in a BWP, or a resource element included in the at least one resource block group is a maximum quantity of resource elements that can be configured for data transmission.

A second aspect provides a communication apparatus including a processor. The processor is configured to enable, by executing a computer program or instructions or by using a processing circuit, the communication apparatus to perform the method according to the first aspect and any one of the possible implementations of the first aspect.

In a possible implementation, the communication apparatus further includes a memory configured to store the computer program or the instructions. Further, the processor is specifically configured to call and run the computer program or the computer instructions stored in the memory, to enable the processor to implement any one of the implementations in the first aspect.

In a possible implementation, the communication apparatus further includes a transceiver (which may also be referred to as a communication interface), and the transceiver is configured to input and/or output a signal through a communication interface. The processor is configured to control the transceiver to send and receive a signal.

A third aspect provides a communication apparatus including a processing circuit (which may also be referred to as a processor) and an input/output interface (which may also be referred to as an interface circuit). The input/output interface is configured to input and/or output a signal. The processing circuit is configured to perform the method according to the first aspect and any one of the possible implementations of the first aspect.

In a possible implementation, the processor is configured to communicate with another apparatus through the interface circuit, and perform the method according to the first aspect. There are one or more processors.

A fourth aspect provides a communication apparatus. The communication apparatus may include a device, a module, or the like that is configured to perform a function of the communication apparatus.

In a possible implementation, the communication apparatus may include modules or units that are in a one-to-one correspondence with the methods/operations/steps/actions described in the first aspect. The module or unit may be implemented by a hardware circuit, software, or a combination of a hardware circuit and software.

In some implementations, the communication apparatus includes a processing unit and a transceiver unit. The processing unit is configured to obtain a first sequence, where the first sequence is for determining K₂ second resources from N₂ second resources, N₂ is a positive integer greater than or equal to K₂, each second resource corresponds to N₁ first resources, and K₂ is a positive integer; the processing unit is further configured to obtain a first codebook, where the first codebook is for determining K₁×K₂ first resources from N₁×N₂ first resources, N₁ is a positive integer greater than or equal to K₁, the N₁×N₂ first resources are resources configured for data transmission, and K₁ is a positive integer; and the transceiver unit is configured to transmit data by using the K₁×K₂ first resources.

In some implementations, the first codebook is for determining K₁ first resources from N₁ first resources corresponding to each second resource.

In some implementations, the N₂ second resources include K₂ resource groups, and each of the K₂ resource groups includes a same quantity of second resources or a different quantity of second resources, where the first sequence is for determining the K₂ second resources respectively from the K₂ resource groups.

In some implementations, N₂ = K₂, the first sequence includes N₂ elements, and the N₂ elements respectively correspond to the N₂ second resources.

In some implementations, the processing unit is specifically configured to: obtain an index of the first sequence; and determine the first sequence from a plurality of second sequences based on the index of the first sequence.

In some implementations, a quantity of same elements in any two of the plurality of second sequences is less than or equal to L, 0 ≤ L < K₂, and L is an integer.

In some implementations, the first sequence includes at least two of the plurality of second sequences.

In some implementations, the plurality of second sequences satisfy: ${S}_{j} \left(k\right) = kP + \left({\sum }_{l = 0}^{L} {k}^{l} {i}_{l}\right) mod P ; {i}_{l} = 0 , 1 , … , P - 1 ; k = 0 , 1 , … , {K}_{2} - 1 ,$ where $j = {\sum }_{l = 0}^{L} {P}^{l} {i}_{l}$, P = N₂/K₂, P is a positive integer, Sⱼ(k) represents a k^{th} element in a j^{th} second sequence of the plurality of second sequences, 0 ≤ L < K₂, and L is an integer.

In some implementations, the plurality of second sequences satisfy: ${S}_{j} \left(k\right) = {\sum }_{p = - 1}^{k - 1} {P}_{p} + \left({\sum }_{l = 0}^{L} {k}^{l} {i}_{l}\right) mod {P}_{k} ; {i}_{l} = 0 , 1 , … , {P}_{l} - 1 ; k = 0 , 1 , … , {K}_{2} - 1 ,$ where $j = {i}_{0} + {\sum }_{w = 1}^{L} \left({i}_{w}{\prod }_{p = 0}^{w - 1} {P}_{p}\right) , {N}_{2} = {\sum }_{k = 0}^{{K}_{2} - 1} {P}_{k}$, Pₖ is a positive integer, Sⱼ(k) represents a k^{th} element in a j^{th} second sequence of the plurality of second sequences, 0 ≤ L < K₂, and L is an integer.

In some implementations, N₂ is related to a value of Pₖ, and Pₖ is for determining a quantity of second resources in each of the K₂ resource groups.

In some implementations, N₂ is related to a value of K₂.

In some implementations, the first codebook is determined based on a sparse code multiple access SCMA codebook.

In some implementations, N₁ = K₁, and the first codebook includes at least two SCMA codebooks that are mutually orthogonal.

In some implementations, the processing unit is specifically configured to: obtain an index of the first codebook; and determine the first codebook from a plurality of second codebooks based on the index of the first codebook.

In some implementations, the plurality of second codebooks are at least two SCMA codebooks that are mutually orthogonal.

In some implementations, each of the K₁×K₂ first resources includes W resource elements, where the transceiver unit is specifically configured to: send the data by using K₁×K₂×W resource elements, where W is a positive integer.

In some implementations, the processing unit is further configured to determine a first resource block group, where the first resource block group includes at least N₁×N₂×W resource elements, and N₁×N₂×W resource elements included in the N₁×N₂ first resources are in a one-to-one correspondence with N₁×N₂×W resource elements in the first resource block group.

In some implementations, the plurality of second sequences are determined based on an index of the first resource block group, and the index of the first resource block group is for determining a position of the first resource block group in at least one resource block group; and the at least one resource block group is a resource block group configured for data transmission, or the at least one resource block group is a resource block group contained in a system.

In some implementations, the plurality of second codebooks are determined based on an index of the first resource block group, and the index of the first resource block group is for determining a position of the first resource block group in at least one resource block group; and the at least one resource block group is a resource block group configured for data transmission, or the at least one resource block group is a resource block group contained in a system.

A fifth aspect provides a computer-readable storage medium. The computer-readable storage medium stores a computer program or instructions. When the computer program or the instructions are run on a computer, the method according to the first aspect and any one of the possible implementations of the first aspect is performed.

A sixth aspect provides a computer program product including a computer program or instructions. When the computer program or the instructions are run on a computer, the method according to the first aspect and any one of the possible implementations of the first aspect is performed.

A seventh aspect provides a communication apparatus including a processor configured to connect to a memory and configured to call a program stored in the memory, to perform the method according to any one of the possible implementations of the first aspect. The memory may be located inside the communication apparatus, or may be located outside the communication apparatus. In addition, there are one or more processors.

In an implementation, the communication apparatus according to the second aspect, the third aspect, the fourth aspect, or the seventh aspect may be a chip or a chip system.

An eighth aspect provides a chip apparatus including a processor configured to call a computer program or computer instructions in a memory, to enable the processor to perform any one of the implementations in the first aspect.

Optionally, the processor is coupled to the memory through an interface.

For descriptions of beneficial effects of any one of the second aspect to the eighth aspect, refer to descriptions of beneficial effects of the first aspect.

### BRIEF DESCRIPTION OF DRAWINGS

FIG. 1 is a diagram of a communication system to which an embodiment of this application is applicable;
FIG. 2 is a schematic flowchart of a communication method according to an embodiment of this application;
FIG. 3 is a diagram of first resources and second resources according to an embodiment of this application;
FIG. 4 is a diagram of a second resource unit according to an embodiment of this application;
FIG. 5 is a diagram of another second resource unit according to an embodiment of this application;
FIG. 6 is a diagram of SCMA codebooks according to an embodiment of this application;
FIG. 7 is a diagram of a correspondence between a first resource and a resource element according to an embodiment of this application;
FIG. 8 is a block diagram of a communication apparatus according to an embodiment of this application; and
FIG. 9 is a block diagram of another communication apparatus according to an embodiment of this application.

### DESCRIPTION OF EMBODIMENTS

The following describes technical solutions in this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the words such as "example" and "for example" mean giving an example, an illustration, or a description. Any embodiment or design scheme described as an "example" in this application should not be explained as being more preferred or having more advantages than another embodiment or design scheme. To be precise, the word "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that, as a new service scenario emerges, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to the embodiments. Therefore, statements "in an embodiment", "in some embodiments", "in some other embodiments", "in some additional embodiments", and the like described in different parts in this specification do not necessarily refer to a same embodiment, but mean "one or more but not all embodiments", unless otherwise specifically emphasized in another manner. The terms "include", "comprise", "have", and their variants all mean "including but not limited to", unless otherwise specifically emphasized in another manner.

The technical solutions in embodiments of this application may be applied to various communication systems, including but not limited to: a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, an LTE frequency division duplex (frequency division duplex, FDD) system, LTE time division duplex (time division duplex, TDD), a worldwide interoperability for microwave access (worldwide interoperability for microwave access, WiMAX) communication system, a 5th generation (5th generation, 5G) mobile communication system or an NR system, a narrowband Internet of Things (narrowband Internet of Things, NB-IoT) system, an enhanced machine-type communication (enhanced machine-type communication, eMTC) system, an enhanced mobile broadband (enhanced mobile broadband, eMBB) system, an ultra reliable low latency communications (ultra reliable low latency communications, URLLC) system, a satellite communication system or an LTE-machine-to-machine (LTE-machine-to-machine, LTE-M) system, and a future 6th generation (6th generation, 6G) mobile communication system.

It should be noted that, in embodiments of this application, the term "communication" may also be described as "data transmission", "signal transmission", "information transmission", "transmission", or the like. In an embodiment of this application, the transmission may include sending or receiving. For example, the transmission may be uplink transmission, for example, a terminal device may send a signal to a network device. Alternatively, the transmission may be downlink transmission, for example, a network device may send a signal to a terminal device.

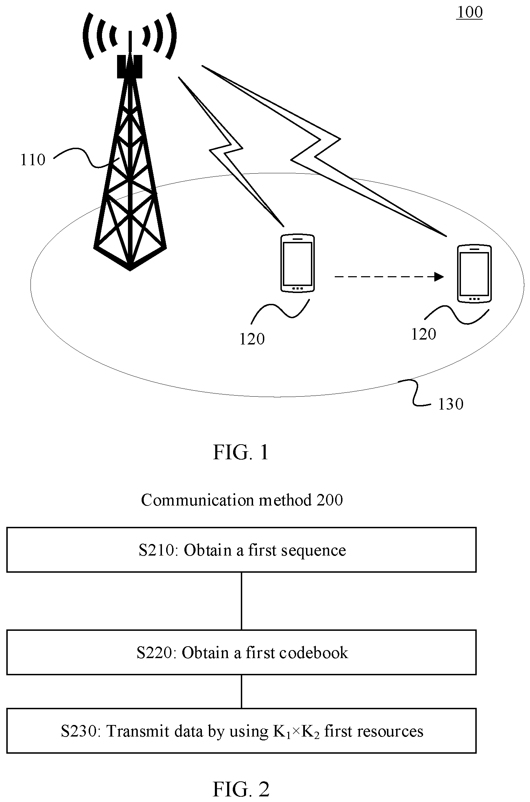

FIG. 1 is a diagram of a communication system to which an embodiment of this application is applicable. As shown in FIG. 1, a communication system 100 may include a network device 110 and a terminal device 120.

The network device 110 may be a device configured to communicate with the terminal device 120, for example, a base station configured to enable the terminal device 120 to access a radio access network (radio access network, RAN). The base station or another central node may schedule a resource at a medium access control (medium access control, MAC) layer. The base station may sometimes be referred to as an access network device or an access network node. It may be understood that devices having functions of the base station may have different names in systems using different radio access technologies. For ease of description, in embodiments of this application, apparatuses that provide wireless communication and access functions for the terminal device are collectively referred to as a base station. In an embodiment of this application, the network device 110 includes but is not limited to a macro base station, a micro base station (also referred to as a small cell), a relay station, and an access point that are in various forms. The network device 110 includes an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), and a baseband unit (baseband unit, BBU) that are in LTE, an access point, a wireless relay node, a wireless backhaul node, a transmission point (transmission point, TP), or a transmission and reception point (transmission and reception point, TRP) that is in a wireless fidelity (wireless fidelity, Wi-Fi) system, or may be a next generation node base station (next generation node base station, gNB) or a transmission point (TRP or TP) in a 5G system, one antenna panel or a group of antenna panels (including a plurality of antenna panels) of a base station in a 5G system, a network node that forms a gNB or a transmission point, such as a baseband unit (BBU) or a distributed unit (distributed unit, DU), and a network device in a future 6G network.

The network device may include a baseband unit (baseband unit, BBU) and a remote radio unit (remote radio unit, RRU). The BBU and the RRU may be placed at different places. For example, the RRU may be remote and placed in a heavytraffic area, and the BBU is placed in a central equipment room. The BBU and the RRU may alternatively be placed in a same place, for example, in a same equipment room. Alternatively, the BBU and the RRU may be different components at one rack.

In embodiments of this application, an apparatus configured to implement a function of the network device may be a network device, or may be an apparatus that can support the network device in implementing the function, for example, a chip system. In the technical solutions in embodiments of this application, an example in which an apparatus configured to implement a function of the network device is a network device and the network device is a base station is used to describe the technical solutions provided in embodiments of this application.

The terminal device 120 may be any device with a wireless transceiver function. The terminal device 120 may also be referred to as user equipment (user equipment, UE), an access terminal, a terminal, a subscriber unit (subscriber unit), a subscriber station, a mobile station, a mobile station (mobile station, MS), a remote station, a remote terminal, a mobile device, a user terminal, a wireless network device, a user agent, or a user apparatus. In embodiments of this application, the terminal device 120 includes but is not limited to: a cellular phone (cellular phone), a wireless data card, a wireless modem (modem), a tablet computer, a laptop computer (laptop computer), a cordless phone, a session initiation protocol (session initiation protocol, SIP) phone, a smartphone (smartphone), a wireless local loop (wireless local loop, WLL) station, a personal digital processing (personal digital assistant, PDA), a handset (handset) with a wireless communication function, a compute device or another device connected to a wireless modem, an on-board device, a wearable device, an unmanned aerial vehicle device, a terminal device in the Internet of Things or the Internet of Vehicles, a terminal in any form in a future network, relay user equipment, or a terminal in a future evolved public land mobile network (public land mobile network, PLMN). Alternatively, the terminal device 120 may be a virtual reality (virtual reality, VR) terminal device, an augmented reality (augmented reality, AR) terminal device, a machine type communication (machine type communication, MTC) terminal, a terminal device in industrial control (industrial control), a terminal device in self driving (self driving), a terminal device in remote medical (remote medical), a terminal device in a smart grid (smart grid), a terminal device in a smart city (smart city), a terminal device in a smart home (smart home), or the like. This is not limited in embodiments of this application.

In embodiments of this application, an apparatus configured to implement a function of the terminal device may be a terminal device, or may be an apparatus that can support the terminal device in implementing the function, for example, a chip system. The chip system may include a chip, or may include a chip and another discrete component. In the technical solutions in embodiments of this application, an example in which an apparatus configured to implement a function of the terminal device is a terminal device, which may also be referred to as a terminal (terminal), and the terminal device may be UE is used below to describe the technical solutions provided in embodiments of this application.

It should be understood that FIG. 1 is merely a simplified diagram of an example for ease of understanding. The communication system 100 may further include another network device or another terminal device, which is not shown in FIG. 1.

The network device 110 may communicate with the terminal device 120 through a wireless link. A transmission link from the network device 110 to the terminal device 120 may be referred to as a downlink (downlink, DL) or a downlink channel, and is configured to transmit a downlink signal. A transmission link from the terminal device 120 to the network device 110 may be referred to as an uplink (uplink, UL) or an uplink channel, and is configured to transmit an uplink signal. For example, the network device 110 may send a downlink reference signal, such as a cell-specific reference signal (cell-specific reference signal, CRS) or a UE-specific reference signal (UE-specific reference signal), to the terminal device 120 through a downlink channel, for channel state information measurement, data demodulation, beam training, time-frequency parameter tracking, and the like. The terminal device 120 may send an uplink reference signal, such as a sounding reference signal (sounding reference signal, SRS) or a demodulation reference signal (demodulation reference signal, DMRS), to the network device 110 through an uplink channel, for uplink and downlink channel measurement, data demodulation, and the like. The network device 110 and the terminal device 120 may further perform downlink data transmission through the downlink channel, and perform uplink data transmission through the uplink channel.

In an embodiment of this application, the network device 110 provides a service for a cell, and the terminal device 110 communicates with the network device 110 by using a transmission resource (such as a frequency-domain resource or a spectrum resource) used by the cell, for example, a cell 130 shown in FIG. 1. The network device 110 may be a macro base station, a micro base station, a relay station, an access point, or the like. The cell 130 may belong to a macro base station or belong to a base station corresponding to a small cell (small cell). The small cell herein may include a metro cell (metro cell), a micro cell (micro cell), a pico cell (pico cell), a femto cell (femto cell), and the like. The small cell is relative to a macro cell (macro cell). The macro cell usually has a large coverage area (for example, a radius of 500 meters or more) and high transmit power. The small cell is characterized by a small coverage area (for example, a radius of tens of meters) and low transmit power, and is suitable for providing a high-rate data transmission service.

Communication systems need to support simultaneous data transmission for a large quantity of terminal devices. However, resources for data transmission are inherently limited. A non-orthogonal multiple access (non-orthogonal multiple access, NoMA) technology allows for data transmission of a large quantity of terminal devices using limited resources in the presence of interference, for example, uplink or downlink data transmission between a terminal device and a network device; or in another example, sidelink data transmission between a terminal device and another terminal device. A communication apparatus on a receiving side can cancel interference between different terminal devices by using a successive interference cancellation (successive interference cancellation, SIC) technology, improving demodulation performance. The "communication apparatus on the receiving side" herein may be a terminal device or may be a network device.

In a sparse code multiple access (sparse code multiple access, SCMA) application scenario, different terminal devices may use different SCMA codebooks, and a codebook used by each terminal device indicates a position of a sub-carrier selected from a plurality of sub-carriers (sub-carrier) and a modulation scheme for data sent on the selected sub-carrier. Positions of some sub-carriers indicated by different SCMA codebooks may partially overlap, causing interference in data sent based on different codebooks. The receiving side can cancel the interference through SIC based on a known codebook. In other words, based on the SCMA codebook, K resources may be selected from N resources for transmission. A ratio between N and K may be referred to as sparsity, and both N and K are positive integers.

How to enable a communication system to flexibly configure sparsity of resources for data transmission is a problem to be urgently resolved.

FIG. 2 is a schematic flowchart of a communication method 200 according to an embodiment of this application. The method 200 allows a communication system to flexibly configure sparsity of resources for data transmission. The method 200 may be performed by a communication apparatus, or may be performed by a component (such as a processor, a chip, or a chip system) in a communication apparatus, or may be performed by a logic module or software that can implement all or some functions of a communication apparatus. The communication apparatus may be a terminal device or may be a network device. The following describes an embodiment of the method 200 with reference to FIG. 2.

S210: Obtain a first sequence.

The first sequence may be for determining K₂ second resources from N₂ second resources, N₂ may be a positive integer greater than or equal to K₂, each second resource may correspond to N₁ first resources, and K₂ may be a positive integer.

The first sequence may correspond to a terminal device. In other words, the first sequence may be a sequence of the terminal device. In other words, the first sequence may be associated with the terminal device, and different terminal devices correspond to different first sequences. N₂ and K₂ may be predefined, or may be indicated by signaling. The first sequence may be predefined, or may be indicated by signaling.

The communication apparatus may also be referred to as a first apparatus. To be specific, an execution body of the solutions of this application may be the first apparatus, or may be a module (for example, a chip system) in the first apparatus, or may be a logic node, a logic module, or software that can implement all or some functions of the first apparatus. This is not limited. For ease of description, the following may use the first apparatus as an example for description.

S210 may include: The first apparatus determines the first sequence. The first apparatus may determine the first sequence in a predefined manner or based on a predefined rule.

S210 may further include: The first apparatus receives the first sequence. The first apparatus may receive signaling. The signaling is for determining the first sequence.

The first sequence may be for determining positions of the K₂ second resources in the N₂ second resources. A specific name of the first sequence is not limited in this application. The first sequence may be referred to as an extend sequence, an index sequence, or the like. The first sequence may be represented by I.

In an example, the first sequence may include indexes of K₂ second resources. It is assumed that K₂ = 3, the first apparatus corresponds to six second resources, and indexes of the six second resources range from 0 to 5 (that is, the zeroth second resource to the fifth second resource). The first sequence may include K₂ elements, and the K₂ elements are in a one-to-one correspondence with the K₂ second resources. For example, the first sequence may include [1, 3, 5], where [1, 3, 5] are indexes of second resources that respectively indicate the first, the third, and the fifth second resources in the six second resources.

Optionally, the first sequence may be represented in a form of a bitmap. A value 1 in the bitmap may indicate a selected resource, or a value 0 in the bitmap may indicate a selected resource. The first sequence may alternatively be present in a form of a character string, and the character string indicates a value of an index of a resource, or the like. This is not limited in this application. For example, in the form of the bitmap, N₂ bits may be included, and the N₂ bits are in a one-to-one correspondence with the N₂ second resources. When a value of a bit in the N₂ bits is 1, a second resource corresponding to the bit may be a selected resource. In this case, the first sequence includes N₂ elements (N₂ bits numbered from the zeroth bit to the (N₂-1)^{th} bit), and the N₂ elements are in a one-to-one correspondence with the N₂ second resources. For example, the first sequence may include [010101]. The first, the third, and the fifth bits are "1", indicating that the first, the third, and the fifth second resources in the six second resources are selected; and the zeroth, the second, and the fourth bits are "0", indicating that the zeroth, the second, and the fourth second resources in the six second resources are not selected.

In another example, the first sequence may include indication information, and the indication information may indicate preset positions of K₂ second resources in N₂ second resources. For example, "1" is preset to correspond to "the first, the third, and the fifth second resources in the six second resources are selected". Then, when the indication information includes "1", the communication apparatus may determine that the first, the third, and the fifth second resources in the six second resources are selected.

A specific name of the second resource is not limited in embodiments of this application. The second resource may be referred to as an extend (extend) resource, and the N₂ second resources may be referred to as an extend resource unit (resource unit, RU), an upper (upper) RU, a virtual resource group, or the like.

Each second resource corresponds to N₁ first resources. Then, N₂ second resources correspond to N₁×N₂ first resources. K₂ second resources correspond to N₁×K₂ first resources. In some other optional implementations, a quantity of first resources corresponding to each second resource varies, or a quantity of first resources corresponding to each of one or some of N₂ second resources varies. Further, when at least two of N₂ second resources correspond to different quantities of first resources, the N₂ second resources correspond to N₁×N₂ first resources, that is, a total quantity of first resources corresponding to the N₂ second resources is still N₁×N₂. However, a quantity of first resources corresponding to each of some second resources is less than N₁, a quantity of first resources corresponding to each of some second resources is equal to N₁, and a quantity of first resources corresponding to each of some second resources is greater than N₁. In another optional implementation, when at least two of N₂ second resources correspond to different quantities of first resources, the N₂ second resources correspond to a plurality of first resources. It may be understood that the "plurality of first resources" herein may not be N₁×N₂ first resources.

For example, a second resource may be a set of first resources. In other words, one second resource may include N₁ first resources. Each second resource may also be considered as a first resource group.

Optionally, a first resource may be considered as a virtual resource. The first resource may include one or more sub-carriers. The sub-carrier in the first resource may be mapped to a sub-carrier in a resource block (resource block, RB). The sub-carrier in the RB may be considered as a physical resource.

A specific name of the first resource is not limited in embodiments of this application. The first resource may be referred to as a kernel or core (kernel or core) resource, and the N₁ first resources may be referred to as a kernel or core RU, a bottom (bottom) RU, virtual resources, or the like.

S220: Obtain a first codebook.

The first codebook may be for determining K₁×K₂ first resources from N₁×N₂ first resources, N₁ may be a positive integer greater than or equal to K₁, the N₁×N₂ first resources may be resources configured for data transmission, and K₁ may be a positive integer.

The first codebook may correspond to a terminal device. In other words, the first codebook may be a sequence of the terminal device. In other words, the first codebook may be associated with the terminal device, and different terminal devices may correspond to different first codebooks. N₁ and K₁ may be predefined, or may be indicated by signaling.

S220 may include: The first apparatus determines the first codebook. The first apparatus may determine the first codebook in a predefined manner or based on a predefined rule.

S220 may further include: The first apparatus receives the first codebook. The first apparatus may receive signaling. The signaling is for determining the first codebook.

The first codebook may be for determining positions of the K₁ first resources in the N₁ first resources and modulation schemes corresponding to the K₁ first resources. A specific name of the first codebook is not limited in embodiments of this application. The first codebook may be referred to as a kernel or core codebook, an index codebook, or the like.

For example, it is assumed that K₁ = 2, one second resource corresponds to four first resources, and indexes of the four first resources range from 0 to 3 (that is, the zeroth first resource to the third first resource). The first codebook may indicate that the first and the third first resources in the four first resources are selected, and indicate modulation schemes corresponding to the first and the third first resources.

In an example, the first codebook is for determining K₁ first resources from N₁ first resources. In this way, K₁×K₂ first resources can be conveniently and quickly determined from N₁×N₂ first resources by using the first codebook and the first sequence. In another example, quantities of first resources determined from N₁ first resources based on the first codebook may be partially or completely different. In this way, K₁×K₂ first resources can be flexibly determined from N₁×N₂ first resources by using the first codebook and the first sequence.

The N₁×N₂ first resources are resources configured by a network device for data transmission between the network device and a terminal device. The configuration may be understood as: The first apparatus configures a resource for data transmission, or the first apparatus obtains first configuration signaling, where the first configuration signaling is for configuring a resource for data transmission. When the first apparatus configures a resource for data transmission, N₂ second resources may be predefined, or N₂ second resources may be determined based on a predefined rule.

It may be understood that the N₁×N₂ first resources may alternatively be understood as resources allocated by a network device to a terminal device. The first resource may also be referred to as an allocated resource or the like. A name of the first resource is not specifically limited in this application.

In a possible implementation, the first configuration signaling is for configuring a first resource block group, the first resource block group includes one or more RBs, and one RB includes several resource elements (resource element, RE). The first resource block group includes resources for data transmission, and the N₂ second resources correspond to the resources for data transmission that are included in the first resource block group. For example, the N₂ second resources are some or all of the resources for data transmission that are included in the first resource block group.

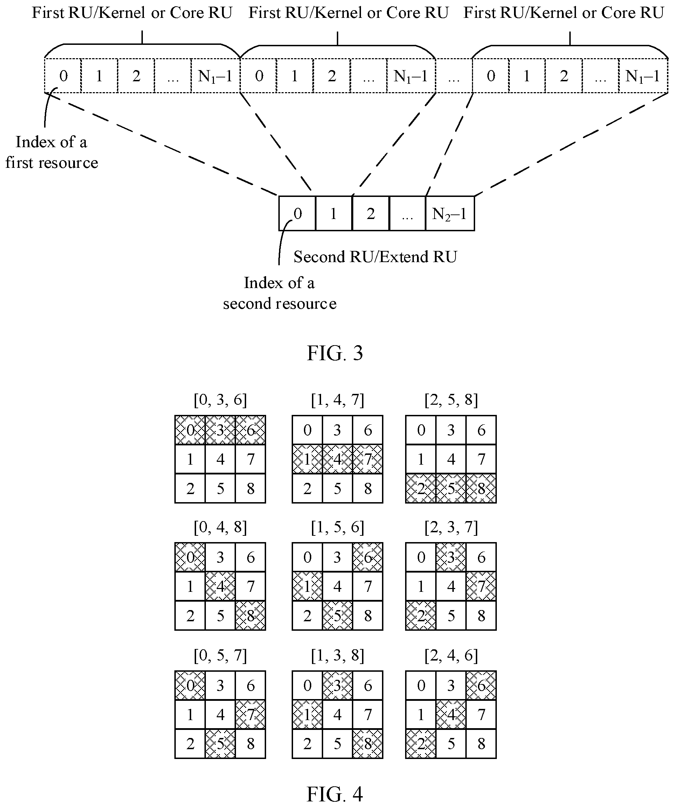

FIG. 3 is a diagram of first resources and second resources according to an embodiment of this application.

A kernel or core RU may be one second resource of an extend RU, or a first RU may be one second resource of a second RU. As shown in FIG. 3, one first RU may include N₁ first resources. Numbers of the N₁ first resources (also referred to as indexes of the first resources) may range from 0 to N₁-1 (that is, the zeroth first resource to the (N₁-1)^{th} first resource). One second RU may include N₂ second resources. Numbers of the N₂ second resources (also referred to as indexes of the second resources) may range from 0 to N₂-1 (that is, the zeroth second resource to the (N₂-1)^{th} second resource). Each second resource may include or correspond to one first RU. In other words, each second resource may include or correspond to N₁ first resources. In this way, a second RU may include N₁×N₂ first resources in total.

A total of N₁×N₂ first resources are numbered from 0 to N₁×N₂-1. This may be understood as that one first resource in one second resource of the second RU uniquely corresponds to one first resource in the N₁×N₂ first resources. In other words, a number (or an index) of one first resource in the N₁×N₂ first resources uniquely corresponds to an index combination. The index combination includes an index of a second resource and an index of one first resource in the second resource corresponding to the index of the second resource.

For example, a correspondence between an n^{th} first resource in the N₁×N₂ first resources and the index combination (an index n₁ of a first resource and an index n₂ of a second resource) satisfies: $n = {n}_{1} + {n}_{2} \times {N}_{1} .$

Herein, n = 0, ..., N₁×N₂-1; n₁ = 0, ..., N₁-1; and n₂ = 0, ..., N₂-1. It can be learned that the n^{th} first resource in the N₁×N₂ first resources corresponds to the n₁^{th} first resource in the n₂^{th} second resource.

S230: Transmit data by using the K₁×K₂ first resources.

That the first apparatus transmits data by using the K₁×K₂ first resources may be understood as: The first apparatus sends or receives data by using the K₁×K₂ first resources.

For example, the K₁×K₂ first resources may be mapped to sub-carriers of an RB, to send data. In some other optional implementations, the K₁×K₂ first resources may be used to transmit data and/or reference signals.

In the foregoing embodiment, a ratio between N₁ and K₁ reflects sparsity, and a ratio between N₂ and K₂ also reflects sparsity. Through adjustment of values of N₁, N₂, K₁, and K₂, as well as sizes of the first resource and the second resource, sparsity of resources for data transmission can be flexibly configured, so that a data packet size, a code rate, or a rate for sending data can be flexibly adjusted. In addition, different terminal devices may correspond to different K₁ and K₂ values, so that different terminal devices can be supported to simultaneously send data with different sparsity and code rates.

In the foregoing embodiment, each second resource corresponds to N₁ first resources. Through construction of a nested relationship between the first resource and the second resource, interference in data transmission between different devices can be reduced. For example, different devices select respective K₂ second resources from N₂ second resources, and select K₁×K₂ first resources based on the respective K₂ second resources. This can effectively reduce a probability of overlap between resources selected by different devices, thereby controlling interference in data transmission between different devices, and flexibly supporting different quantities of devices.

It may be understood that, when sparsity of the first sequence and/or the first codebook is less than 1, some first resources may be determined from the N₁×N₂ first resources based on the first codebook and the first sequence. When sparsity of the first sequence and sparsity of the first codebook are both equal to 1, the N₁×N₂ first resources may be determined based on the first codebook and the first sequence.

Optionally, in some other implementation scenarios of the foregoing embodiment, the N₂ second resources include K₂ resource groups, and each of the K₂ resource groups includes a same quantity of second resources or a different quantity of second resources, where the first sequence is for determining the K₂ second resources respectively from the K₂ resource groups.

The N₂ second resources may include the K₂ resource groups. In other words, the N₂ second resources may be grouped into the K₂ resource groups.

FIG. 4 is a diagram of a second resource unit according to an embodiment of this application. Refer to FIG. 4. FIG. 4 includes nine sequences. It is assumed that one second resource unit includes nine second resources, three second resources are selected from the nine second resources in the resource unit for each sequence, and a shaded part indicates a selected second resource.

As shown in FIG. 4, different sequences correspond to different indexes of second resources, that is, different combinations of second resources are selected for different sequences. The second resources in the second resource unit may be arranged in rows and columns, and second resources in each column may be considered as a resource group. In FIG. 4, each resource group includes three second resources, that is, each resource group includes a same quantity of second resources. The resource unit shown in FIG. 4 is uniform. The "uniform" may be understood as that the second resources in the resource unit may be partitioned into P rows and K₂ columns, where both P and K₂ are positive integers. In other words, a quantity of the second resources in the resource unit is divisible by K₂.

A same element in two sequences indicates that the element belongs to the two sequences, or belongs to both the two sequences. For example, the element "0" in the sequence [0, 3, 6] belongs to the sequence [0, 3, 6], the sequence [0, 4, 8], and the sequence [0, 5, 7].

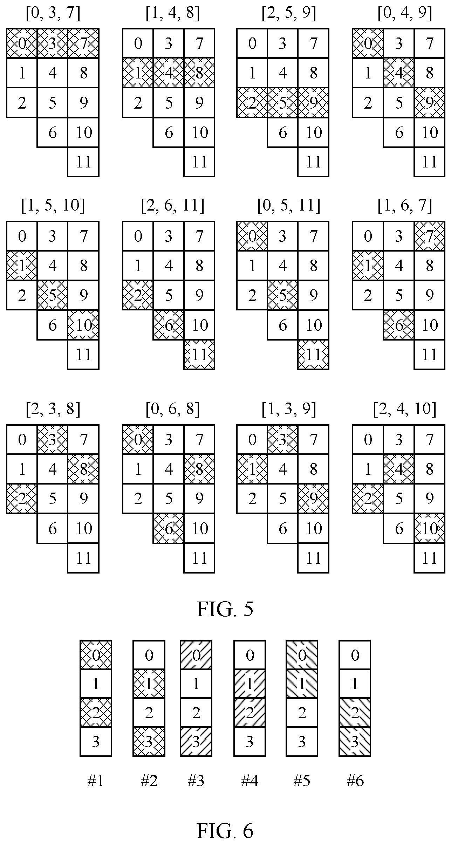

FIG. 5 is a diagram of another second resource unit according to an embodiment of this application. Refer to FIG. 5. FIG. 4 includes 12 sequences. It is assumed that one second resource unit includes 12 second resources, three second resources are selected from the 12 second resources in the resource unit for each sequence, and a shaded part indicates a selected second resource.

As shown in FIG. 5, different sequences correspond to different indexes of second resources, that is, different combinations of second resources are selected for different sequences. The second resources in the second resource unit may be arranged in rows and columns, and second resources in each column may be considered as a resource group. In FIG. 5, each resource group includes three, four, or five second resources, that is, each resource group includes a different quantity of second resources. The resource unit shown in FIG. 5 is non-uniform. The "non-uniform" may be understood as that the second resources in the resource unit are not partitioned into P rows and K₂ columns, where both P and K₂ are positive integers. It should be noted that, in a "non-uniform" scenario, a quantity of second resources in a resource unit may not be divisible by K₂, or may be divisible by K₂. For example, in the example of FIG. 5, a quantity of the second resources in the resource unit may be divisible by K₂. In other words, in the example of FIG. 5, the resource unit may be uniform or non-uniform.

In the foregoing embodiment, each of K₂ resource groups may include a same quantity of second resources, so that the first sequence can be generated simply and conveniently. Each of K₂ resource groups may include a different quantity of second resources. In this way, K₂ may not be a factor of N₂, so that more values of N₂ and K₂ can be provided. The second resource includes the first resource, and a resource element in the first resource may be mapped to a sub-carrier (a sub-carrier for data transmission) in one or more resource blocks (resource block, RB) for data transmission. More values of N₂ and K₂ make it easier for a quantity of resource elements in the first resource to approach a quantity of sub-carriers in one or more RBs, thereby improving resource utilization.

Optionally, in some other implementation scenarios of the foregoing embodiment, N₂ = K₂, the first sequence includes N₂ elements, and the N₂ elements respectively correspond to the N₂ second resources.

In other words, all the second resources may be selected based on the first sequence. The first sequence in the foregoing solution may be understood as "non-sparse". However, it should be noted that the second resource may be determined based on the first sequence, and the first resource may be determined based on the first codebook. Therefore, if the first codebook is sparse, that is, N₁ > K₁, the overall resources may still be sparse. Each terminal device performs data transmission by using sparse first resources, so that interference between terminal devices can be reduced.

According to the foregoing solution, the second resources may be non-sparse. In this way, a data transmission bandwidth can be ensured, and a data transmission rate can be increased. In addition, the first codebook may still be sparse, so that determining of sparsity of the first resources is not affected, retaining the characteristic of interference resistance.

Optionally, in some other implementation scenarios of the foregoing embodiment, S210 includes: obtaining an index of the first sequence; and determining the first sequence from a plurality of second sequences based on the index of the first sequence.

The plurality of second sequences may be understood as a sequence set. The sequence set may also be referred to as an index sequence set, an extend sequence set, or the like. A name of the sequence set is not limited in this application. In some optional embodiments, determining the first sequence from the plurality of second sequences may include: selecting one second sequence from the plurality of second sequences as the first sequence. In some other optional embodiments, determining the first sequence from the plurality of second sequences may include: determining the first sequence based on at least two of the plurality of second sequences.

The second sequence may be predefined, or may be generated based on a formula. A specific name of the second sequence is not limited in this application. The second sequence may be referred to as an extend sequence, an index sequence, or the like. A name of the second sequence may be the same as or different from a name of the first sequence.

In some other optional implementations, S210 includes: obtaining an index of the first sequence; and determining the first sequence from at least one second sequence based on the index of the first sequence. In other words, a quantity of sequences in the sequence set is not limited in embodiments of this application, and the sequence set may include one or more sequences.

Obtaining the index of the first sequence may include: The first apparatus determines the index of the first sequence. The first apparatus may determine the index of the first sequence in a predefined manner or based on a predefined rule.

Alternatively, obtaining the index of the first sequence may include: The first apparatus receives the index of the first sequence. The first apparatus may receive signaling. The signaling is for determining the index of the first sequence.

In another example, the index of the first sequence may be predefined, for example, defined in a protocol or defined in another manner.

It may be understood that the first sequence may be determined by determining the index of the first sequence in the at least one second sequence.

For example, the sequence set may be represented by S, where 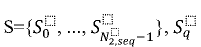 is a q^{th} sequence in the sequence set or is a q^{th} second sequence in the plurality of second sequences, and q = 0, ..., N_{2,seq}-1. N_{2,seq} represents a quantity of sequences included in the sequence set. Alternatively, N_{2,seq} represents a quantity of second sequences. N_{2,seq} may be a positive integer.

A q'^{th} sequence in the sequence set may be determined as the first sequence I in a predefined or signaling indication manner, for example, according to the following formula: $I \left(k\right) = {S}_{q ′} \left(k\right) , k = 0 , … , {K}_{2} - 1 .$
I(k) and S_{q'}(k) respectively represent a k^{th} element in the first sequence and a k^{th} element in the second sequence.

Optionally, in some other implementation scenarios of the foregoing embodiment, a quantity of same elements in any two of the plurality of second sequences is less than or equal to L, 0 ≤ L < K₂, and L is an integer.

The foregoing solution may also be understood as that a quantity of same elements in any two sequences in the sequence combination is less than or equal to L. For example, for the nine second sequences (also referred to as a sequence set) shown in FIG. 4, L = 1. To be specific, in FIG. 4, there is at most one same element between any two sequences. In another example, for the 12 second sequences (also referred to as a sequence set) shown in FIG. 5, L = 1.

An element in a sequence corresponds to a second resource. To be specific, in a plurality of second sequences (also referred to as a sequence set), there are at most L same second resources between second resources corresponding to any one sequence and second resources corresponding to another sequence.

It may be understood that, when L = 0, any two of a plurality of second sequences (also referred to as a sequence set) are orthogonal. In other words, the sequence set is an orthogonal set. In other words, second resources corresponding to all the sequences are orthogonal. When L = 0, the sequence set exhibits good interference resistance. When L is large, a quantity of second sequences is large, or the sequence set includes a large quantity of sequences, so that a plurality of terminal devices can be simultaneously supported to perform data transmission.

According to the foregoing solution, L may correspond to an upper limit of a quantity of same elements in two second sequences, so that L may represent an upper limit of a quantity of same second resources corresponding to two terminal devices, that is, represent an upper limit of a quantity of same second resources in K₂ second resources corresponding to each of the two terminal devices. When a value of L is small, a quantity of same second resources corresponding to the plurality of second sequences is small, resulting in good interference resistance for data transmission. Compared with a smaller value of L, a larger value of L allows for more sequences included in the sequence set, so that more terminal devices can be simultaneously supported to perform data transmission. Therefore, through configuration of L, interference resistance and application ranges of a plurality of terminal devices can be conveniently controlled. In addition, according to the foregoing solution, interference in data sent with different sparsity can be controlled.

Optionally, in some other implementation scenarios of the foregoing embodiment, the first sequence includes at least two of the plurality of second sequences.

In other words, the first sequence may be obtained by concatenating the at least two sequences in the plurality of second sequences (also referred to as a sequence set). For example, as shown in FIG. 4, the first sequence may be obtained by concatenating the sequence [0, 3, 6] and the sequence [1, 4, 7], that is, the first sequence is [0, 1, 3, 4, 6, 7].

In some optional implementations, the at least two second sequences (which may be referred to as to-be-concatenated sequences) include a same element, and a quantity of the element in the first sequence (which may be referred to as a concatenated sequence) is 1. For example, as shown in FIG. 4, the first sequence may be obtained by concatenating the sequence [0, 3, 6] and the sequence [0, 5, 7]. In this case, the first sequence may be [0, 3, 5, 6, 7]. The element "0" is a same element in the sequence [0, 3, 6] and the sequence [0, 5, 7], and a quantity of the element "0" in the first sequence [0, 3, 5, 6, 7] is 1. In other words, the first sequence includes only one element repeated in the at least two second sequences.

According to the foregoing solution, the at least two sequences in the sequence set are concatenated into the first sequence, increasing a quantity of elements in the first sequence, so that the first sequence corresponds to a large quantity of second resources, thereby increasing a data transmission rate.

Optionally, in some other implementation scenarios of the foregoing embodiment, the plurality of second sequences satisfy: ${S}_{j} \left(k\right) = kP + \left({\sum }_{l = 0}^{L} {k}^{l} {i}_{l}\right) mod P ; {i}_{l} = 0 , 1 , … , P - 1 ; k = 0 , 1 , … , {K}_{2} - 1 ;$ or satisfy: ${S}_{j} \left(k\right) = kP + \left({\sum }_{l = 0}^{L} {k}^{l} {i}_{l}+{Δ}_{1}\right) mod P ; {i}_{l} = 0 , 1 , … , P - 1 ; k = 0 , 1 , … , {K}_{2} - 1 .$
$j = {\sum }_{l = 0}^{L} {P}^{l} {i}_{l}$*,* P = N₂/K₂, P is a positive integer, Sⱼ(k) represents a k^{th} element in a j^{th} second sequence of the plurality of second sequences, 0 ≤ L < K₂, and L is an integer. Δ₁ is an offset, Δ₁ is an integer, and Δ₁ may be predefined or indicated by signaling.

Optionally, S is generated in advance.

A sequence set generated according to the foregoing formula includes P^{L+1} sequences, or P^{L+1} second sequences may be generated according to the foregoing formula. In some optional implementations, P may be a composite number. For example, P = 4. Correspondingly, example values include N₂ = 12 and K₂ = 3; and N₂ = 16 and K₂ = 4.

According to the foregoing formula, different interference configurations may be set, as shown in Table 1.

**Table 1**

| Interference configuration | Sequence set |
|---|---|
| Interference configuration 1 | Select all second resources |
| Interference configuration 2 | *P = N*₂/*K*₂ ; *K*₂ ≥ 1; *L* = 0 |
| Interference configuration 3 | *P* = *N*₂/*K*₂ ; *K*₂ ≥ 2; *L =* 1 |
| Interference configuration 4 | *P = N*₂/*K*₂ ; *K*₂ ≥ 2; *L* = 1, and simultaneously select two sequences |
| Interference configuration 5 | *P* = *N*₂/*K*₂ ; *K*₂ ≥ 2; *L* = 1, and simultaneously select three sequences |
| Interference configuration 6 | *P = N*₂/*K*₂ ; *K*₂ ≥ 3;*L* = 2 |
| Interference configuration 7 | *P* = *N*₂/*K*₂ ; *K*₂ ≥ 4; *L* = 3 |

It should be noted that the first apparatus may support all of the interference configurations in Table 1, or may support only some of the interference configurations. In other words, some or all of the rows in Table 1 may be selected.

The interference configuration 1 may be understood as a case in which L = 0, P = 1, and N₂ = K₂. A second sequence corresponding to the interference configuration 1 may be represented by the following formula: ${S}_{{i}_{0}} \left(k\right) = kP + {i}_{0} mod P ; {i}_{0} = 0 ; k = 0 , 1 , … , {K}_{2} - 1 .$

Alternatively, the interference configuration 1 may be represented as S = [0, ..., N₂-1]. The interference configuration 1 corresponds to only one sequence. In other words, a sequence set corresponding to the interference configuration 1 includes only one sequence.

A second sequence corresponding to the interference configuration 2 may be represented by the following formula: ${S}_{{i}_{0}} \left(k\right) = kP + {i}_{0} mod P ; {i}_{0} = 0 , 1 , … , P - 1 ; k = 0 , 1 , … , {K}_{2} - 1 .$

A quantity of same elements between any two sequences in a sequence set corresponding to the interference configuration 2 is 0, that is, any two sequences are orthogonal. The sequence set includes P sequences. For example, N = 9, K = 3, and P = 3. The sequence set includes three sequences: S₀ = [0, 3, 6], S₁ = [1, 4, 7], and S₂ = [2, 5, 8]. It may be understood that S₀ = [0, 3, 6] indicates that the zeroth, the third, and the sixth second resources are determined in the nine second resources.

A second sequence corresponding to the interference configuration 3 may be represented by the following formula: ${S}_{{i}_{1} P + {i}_{0}} \left(k\right) = kP + \left({ki}_{1}+{i}_{0}\right) mod P ; {i}_{1} , {i}_{0} = 0 , 1 , … , P - 1 ; k = 0 , 1 , … , {K}_{2} - 1 .$

Herein, i₀ and i₁ may be independently selected from 0 to P-1. Therefore, there may be a total of P² value combinations <i₀, i₁> of i₀ and i₁. Correspondingly, P² sequences may be generated, corresponding to P² frequency-domain positions. A sequence set corresponding to the interference configuration 3 includes P² sequences. In other words, the interference configuration 3 corresponds to P² second sequences.

FIG. 4 may be an example of the interference configuration 3. For FIG. 4, N₂ = 9, K₂ = 3, P = 3, and L = 1. The sequence set includes nine sequences, respectively S₀ to S₈, and at least two of the nine sequences are non-orthogonal.

As shown in FIG. 4, different sequences correspond to different indexes of second resources, that is, different combinations of second resources are selected for different sequences. The second resources in the second resource unit may be arranged in rows and columns, and second resources in each column may be considered as a resource group. In FIG. 4, each resource group includes three second resources, that is, each resource group includes a same quantity of second resources. The resource unit shown in FIG. 4 is uniform. The "uniform" may be understood as that the second resources in the resource unit may be partitioned into P rows and K₂ columns, where both P and K₂ are positive integers. In other words, a quantity of the second resources in the resource unit is divisible by K₂.

The interference configuration 4 may include a sequence formed by concatenating any two sequences in the interference configuration 3. The "formed by concatenating" may also be understood as "simultaneously select". For example, assuming that the sequence [0, 3, 6] and the sequence [0, 4, 8] are two sequences in the interference configuration 3, the sequence of the interference configuration 4 may include a sequence [0, 3, 4, 6, 8], or the sequence of the interference configuration 4 may be a combination of the sequence [0, 3, 6] and the sequence [0, 4, 8].

When the interference configuration 4 is applied, the communication apparatus may determine a sequence in the interference configuration 4, for example, determine that a sequence corresponding to the interference configuration 4 includes the sequence [0, 3, 4, 6, 8]. Alternatively, the communication apparatus may not determine a sequence in the interference configuration 4, but select any two sequences corresponding to the interference configuration 3 simultaneously, for example, select the sequence [0, 3, 6] and the sequence [0, 4, 8] simultaneously.

In some optional implementations, any two elements in the sequence corresponding to the interference configuration 4 are different. To be specific, when two sequences are selected based on the sequence set of the interference configuration 3 and concatenated to obtain one sequence in the sequence set of the interference configuration 4, if the two selected sequences for concatenation include a same element, the concatenated sequence includes the element only once.

In some optional implementations, a k'^{th} sequence in the sequence set corresponding to the interference configuration 4 is obtained by concatenating a 2k'^{th} sequence and a (2k'+1)^{th} sequence in the sequence set of the interference configuration 3. Herein, $k ′ = 0 , … , \left⌊{P}^{2}/2\right⌋ - 1$. The sequence set corresponding to the interference configuration 4 includes $\left⌊{P}^{2}/2\right⌋$ sequences. $\left⌊□\right⌋$ indicates a rounding down operation. It may be understood that two adjacent sequences in the sequence set corresponding to the interference configuration 3 may be concatenated to obtain a sequence corresponding to the interference configuration 4.

The interference configuration 5 may include a sequence formed by concatenating any three sequences in the interference configuration 3.

In some optional implementations, a k'^{th} sequence in the sequence set corresponding to the interference configuration 5 is obtained by concatenating a 3k'^{th} sequence, a (3k'+1)^{th} sequence, and a (3k'+2)^{th} sequence in the sequence set of the interference configuration 3. Herein, $k ′ = 0 , … , \left⌊{P}^{2}/3\right⌋ - 1$. The sequence set corresponding to the interference configuration 4 includes $\left⌊{P}^{2}/3\right⌋$ sequences. It may be understood that three adjacent sequences in the sequence set corresponding to the interference configuration 3 may be concatenated to obtain a sequence corresponding to the interference configuration 5.

For another embodiment of the interference configuration 5, refer to the foregoing embodiment of the interference configuration 4. A difference lies in that the interference configuration 4 includes a sequence formed by concatenating two sequences in the sequence set corresponding to the interference configuration 3, and the interference configuration 5 includes a sequence formed by concatenating three sequences in the sequence set corresponding to the interference configuration 3. Another embodiment is similar thereto, and details are not described herein again.

A second sequence corresponding to the interference configuration 6 may be represented by the following formula: ${S}_{{i}_{2} {P}^{2} + {i}_{1} P + {i}_{0}} \left(k\right) = kP + \left({k}^{2}{i}_{2}+{ki}_{1}+{i}_{0}\right) mod P ; {i}_{2} , {i}_{1} , {i}_{0} = 0 , 1 , … , P - 1 ; k = 0 , 1 , … , {K}_{2} - 1 .$

A second sequence corresponding to the interference configuration 7 may be represented by the following formula: ${S}_{{i}_{2} {P}^{3} + {i}_{2} {P}^{2} + {i}_{1} P + {i}_{0}} \left(k\right) = kP + \left({k}^{3}{i}_{3}+{k}^{2}{i}_{2}+{ki}_{1}+{i}_{0}\right) mod P ; {i}_{3} , {i}_{2} , {i}_{1} , {i}_{0} = 0 , 1 , … , P - 1 ; k = 0 , 1 , … , {K}_{2} - 1 .$

It may be understood that, when L > 0, a plurality of sequences in a sequence set are non-orthogonal. In other words, there are two non-orthogonal second sequences in a plurality of second sequences.

It may be understood that, for a given P, a sequence set corresponding to L-1 is a subset of a sequence set corresponding to L. For example, the sequence set corresponding to L-1 may be a set formed by the first P^{L} sequences in the sequence set corresponding to L.

According to the foregoing embodiment, N₂ second resources may be evenly grouped into K₂ resource groups, and a plurality of second sequences may be easily generated according to the foregoing formula.

Optionally, in some other implementation scenarios of the foregoing embodiment, the plurality of second sequences satisfy: ${S}_{j} \left(k\right) = {\sum }_{p = - 1}^{k - 1} {P}_{p} + \left({\sum }_{l = 0}^{L} {k}^{l} {i}_{l}\right) mod {P}_{k} ; {i}_{l} = 0 , 1 , … , {P}_{l} - 1 ; k = 0 , 1 , … , {K}_{2} - 1 ;$ or satisfy: ${S}_{j} \left(k\right) = {\sum }_{p = - 1}^{k - 1} {P}_{p} + \left({\sum }_{l = 0}^{L} {k}^{l} {i}_{l} + {Δ}_{2}\right) mod {P}_{k} ; {i}_{l} = 0 , 1 , … , {P}_{l} - 1 ; k = 0 , 1 , … , {K}_{2} - 1 .$
$j = {i}_{0} + {\sum }_{w = 1}^{L} \left({i}_{w}{\prod }_{p = 0}^{w - 1} {P}_{p}\right) , {N}_{2} = {\sum }_{k = 0}^{{K}_{2} - 1} {P}_{k}$, Pₖ is a positive integer, Sⱼ(k) represents a k^{th} element in a j^{th} second sequence of the plurality of second sequences, 0 ≤ L < K₂, and L is an integer. Δ₂ is an offset, Δ₂ is an integer, and Δ₂ may be predefined or indicated by signaling.

The foregoing solution may also be described as follows: Pₖ is selected from P₀, ..., and P_{K2-1}, K₂ positive integers in total. Among P₀, ..., and P_{K2-1}, at least two of them may be different, or all of them may be the same. When P₀, ..., and P_{K2-1} are all the same, the foregoing solution may be understood as a solution in which an RU is uniformly divided (for example, FIG. 4). When at least two Pₖ values in P₀, ..., and P_{K2-1} are different, the foregoing solution may be understood as a solution in which an RU is non-uniformly divided (for example, FIG. 5). A sequence set generated according to the foregoing formula may include ${\prod }_{p = 0}^{L} {P}_{p}$ sequences. In other words, ${\prod }_{p = 0}^{L} {P}_{p}$ second sequences may be generated according to the foregoing formula. Herein, P₋₁ = 0. It may be understood that K2 and K₂ may be equivalent. A person skilled in the art may understand that apparent typographical errors in subscripts or superscripts in this application should not be understood as indicating a plurality of different meanings.

For example, when L = 0, a sequence in a sequence set may be generated according to the following formula: ${S}_{{i}_{0}} \left(k\right) = {\sum }_{p = - 1}^{k - 1} {P}_{p} + {i}_{0} mod {P}_{0} ; {i}_{0} = 0 , 1 , … , min \left({P}_{k}\right) - 1 ; k = 0 , 1 , … , {K}_{2} - 1 .$

Herein, min(Pₖ) indicates a minimum value among P₀, ..., and P_{K2-1}.

The K positive integers P₀, ..., and P_{K2-1} may be referred to as a parameter sequence P_{seq}, that is, P_{seq} = [P₀, ..., P_{K2-1}].

In some optional implementations, P₀, ..., and P_{K2-1} are arranged in ascending order.

For example, when L = 1, a sequence in a sequence set may be generated according to the following formula: ${S}_{j} \left(k\right) = {\sum }_{p = - 1}^{k - 1} {P}_{p} + \left({ki}_{1}+{i}_{0}\right) mod {P}_{k} ; ; k = 0 , 1 , … , {K}_{2} - 1 .$

Herein, *i*₀ = 0,1, ..., *P*₀ - 1; *i*₁ = 0, 1, ... , *P*₁ - 1; *j* = *i*₀ + *i*₁*P*₀; P₋₁ = 0. The sequence set includes P₀×P₁ sequences.

FIG. 5 may be an example of the foregoing formula. For FIG. 5, N₂ = 9, K₂ = 3, L = 1, and P_{seq} = [3, 4, 5]. The sequence set includes 12 sequences, respectively S₀ to S₁₁, and at least two of the 12 sequences are non-orthogonal.

For example, when L = 2, a sequence in a sequence set may be generated according to the following formula: ${S}_{j} \left(k\right) = {\sum }_{p = - 1}^{k - 1} {P}_{p} + \left({k}^{2}{i}_{2}+{ki}_{1}+{i}_{0}\right) mod {P}_{k} ; ; k = 0 , 1 , … , {K}_{2} - 1 .$

Herein, *i*₀ = 0,1, ... , *P*₀ - 1; *i*₁ = 0,1, ... , *P*₁ - 1; *i*₂ = 0,1, ... , *P*₂ - 1; *j* = *i*₀ + *i*₁*P*₀ + *i*₂*P*₁*P*₀; P₋₁ = 0. The sequence set includes P₀×P₁×P₂ sequences.

According to the foregoing embodiment, N₂ second resources may be unevenly grouped into K₂ resource groups, and a plurality of second sequences may be easily generated according to the foregoing formula.

Optionally, in some other implementation scenarios of the foregoing embodiment, N₂ is related to a value of Pₖ, and Pₖ is for determining a quantity of second resources in each of the K₂ resource groups.

The size N₂ of a second RU may correspond to the parameter sequence P_{seq}, and the correspondence may be predefined or may be indicated by signaling.

For example, when K₂ = 3, possible values of N₂ and P_{seq} are shown in Table 2.

**Table 2**

| N₂ | P_{seq} | N₂ | P_{seq} |
|---|---|---|---|
| 8 | [2, 2, 4], [2, 3, 3] | 18 | [2, 7, 9], [3, 6, 9], [4, 7, 7], [5, 4, 9], [5, 6, 7], [6, 3, 9], [6, 4, 8], [7, 2, 9], [8, 2, 8] |
| 9 | [2, 2, 5], [3, 2, 4], [3, 3, 3] | 19 | [2, 8, 9], [3, 7, 9], [5, 7, 7], [6, 4, 9], [7, 3, 9], [7, 4, 8] |
| 10 | [2, 2, 6], [3, 2, 5], [4, 2, 4] | 20 | [2, 9, 9], [3, 8, 9], [4, 7, 9], [6, 7, 7], [7, 4, 9], [8, 3, 9], [8, 4, 8] |
| 11 | [2, 2, 7], [2, 3, 6], [2, 4, 5], [3, 2, 6] | 21 | [3, 9, 9], [4, 8, 9], [5, 7, 9], [7, 7, 7], [9, 3, 9] |
| 12 | [2, 2, 8], [2, 3, 7], [2, 5, 5], [3, 2, 7], [3, 3, 6], [3, 4, 5], [4, 2, 6] | 22 | [4, 9, 9], [5, 8, 9] |
| 13 | [2, 2, 9], [2, 3, 8], [3, 2, 8], [3, 3, 7], [3, 5, 5], [4, 2, 7], [4, 3, 6], [5, 2, 6] | 23 | [5, 9, 9], [6, 8, 9] |
| 14 | [2, 3, 9], [2, 4, 8], [2, 5, 7], [3, 2, 9], [3, 3, 8], [4, 2, 8], [4, 3, 7], [4, 5, 5], [5, 2, 7], [5, 3, 6], [6, 2, 6] | 24 | [6, 9, 9], [7, 8, 9] |
| 15 | [2, 4, 9], [2, 6, 7], [3, 3, 9], [3, 4, 8], [3, 5, 7], [4, 2, 9], [4, 3, 8], [5, 2, 8], [5, 3, 7], [5, 5, 5], [6, 3, 6] | 25 | [7, 9, 9] |
| 16 | [2, 7, 7], [3, 4, 9], [3, 6, 7], [4, 3, 9], [4, 4, 8], [5, 2, 9], [6, 2, 8] | 26 | [8, 9, 9] |
| 17 | [2, 6, 9], [3, 7, 7], [4, 4, 9], [4, 6, 7], [5, 3, 9], [5, 4, 8], [6, 2, 9], [7, 2, 8] | 27 | [9, 9, 9] |

It should be noted that the relationship between the size of the second RU and the parameter sequence P_{seq} may be selected from any combination in Table 2, for example, may be a part or all of Table 2.

In another example, when K₂ = 4, possible values of N₂ and P_{seq} are shown in Table 3.

**Table 3**

| N₂ | P_{seq} | N₂ | P_{seq} |
|---|---|---|---|
| 18 | [3, 3, 3, 9], [3, 5, 5, 5] | 25 | [3, 7, 7, 8], [4, 3, 9, 9], [4, 7, 7, 7], [5, 3, 9, 8], [5, 4, 9, 7] |
| 19 | [4, 5, 5, 5] | 26 | [4, 7, 7, 8], [5, 3, 9, 9], [5, 7, 7, 7] |
| 20 | [5, 5, 5, 5] | 27 | [3, 7, 9, 8], [6, 3, 9, 9], [6, 7, 7, 7] |
| 21 | [3, 3, 6, 9], [3, 3, 7, 8] | 28 | [3, 8, 9, 8], [4, 7, 9, 8], [7, 3, 9, 9], [7, 7, 7, 7] |
| 22 | [3, 3, 7, 9], [3, 3, 8, 8], [3, 4, 8, 7], [3, 5, 7, 7], [4, 3, 6, 9], [4, 3, 7, 8] | 29 | [4, 8, 9, 8], [8, 3, 9, 9] |
| 23 | [3, 3, 8, 9], [3, 3, 9, 8], [3, 4, 9, 7], [3, 5, 7, 8], [4, 3, 8, 8], [4, 4, 8, 7], [5, 3, 6, 9], [5, 3, 7, 8] | 30 | [9, 3, 9, 9] |
| 24 | [3, 3, 9, 9], [3, 7, 7, 7], [4, 3, 8, 9], [4, 3, 9, 8], [4, 4, 9, 7], [5, 4, 8, 7], [6, 3, 6, 9] | | |

It should be noted that the relationship between the size of the second RU and the parameter sequence P_{seq} may be selected from any combination in Table 3, for example, may be a part or all of Table 3.

Optionally, in some other implementation scenarios of the foregoing embodiment, N₂ is related to a value of K₂.

N₂ may represent a size of a second RU. That N₂ is related to the value of K₂ may be understood as that N₂ corresponds to the value of K₂. For example, the correspondence may be predefined, or a network device indicates the correspondence by signaling.

For example, a relationship between the size of the second RU and a resource quantity K₂ may be shown in Table 4.

**Table 4**

| N₂ | K₂ |
|---|---|
| 5 | 1 |
| 6 | 2 |
| 9 | 3 |
| 10 | 2 |
| 15 | 3 |
| 20 | 4 |
| 21 | 3 |
| 25 | 5 |
| 28 | 4 |
| 33 | 3 |
| 35 | 5 |
| 42 | 6 |
| 49 | 7 |

It should be noted that the relationship between the size of the second RU and the resource quantity K₂ may be selected from any combination in Table 4, for example, may be a part or all of Table 4. In addition, a ratio between N₂ and K₂ may be any value. In some optional embodiments, a ratio between N₂ and K₂ may be any prime number.

A possible value of N₂ includes 6, 9, 10, 15, 20, 21, or the like. N₂ may be predefined, or may be indicated by signaling.

In some optional embodiments, a value of N₂/K₂ is a positive integer. Values of N₂ and K₂ may be other positive integers different from those in Table 4. Values of N₂ and K₂ may be predefined or may be indicated based on signaling.

Optionally, in some other implementation scenarios of the foregoing embodiment, the first codebook is for determining K₁ first resources from N₁ first resources corresponding to each second resource.

In other words, K₂ second resources may be determined from N₂ second resources based on the first sequence, and K₁ first resources may be determined from N₁ first resources based on the first codebook.

According to the foregoing embodiment, based on the first codebook, K₁ first resources may be determined from N₁ first resources. In this way, the communication apparatus can conveniently and flexibly determine K₁×K₂ first resources based on the first sequence and the first codebook.

Optionally, in some other implementation scenarios of the foregoing embodiment, the first codebook is determined based on an SCMA codebook.

The SCMA codebook may indicate positions of the K₁ first resources in the N₁ first resources and a manner of generating a modulated symbol from bit data in the K₁ first resources. The manner of generating a modulated symbol from bit data on a sub-carrier in the K₁ first resources may be determined based on a modulation scheme for data sent on a sub-carrier in the K₁ first resources.

An example in which each first resource includes one sub-carrier is used below. It may be understood that the first resource may alternatively include a plurality of sub-carriers. This is not limited in this application. A modulation scheme used for data sent on each of K₁ sub-carriers may be independent. Modulation schemes used for data sent on all of K₁ sub-carriers may be joint. This may be considered as multi-dimensional modulation.

K₁ modulated symbols may be obtained from N_{bit} bits based on multi-dimensional modulation, and mapped to the K₁ sub-carriers. If values of N_{bit} bits form a combination, there are 2*^{N_{bit}}* value combinations. For example, if N_{bit} = 2, values of the zeroth bit and the first bit in the two bits have four combinations: 0, 0; 0, 1; 1, 0; and 1, 1.

For multi-dimensional modulation, an amplitude and phase of each of K₁ modulated symbols corresponding to each value combination may be designed. In this way, 2*^{N_{bit}}* value combinations correspond to 2*^{N_{bit}}* modulated symbol combinations, where each modulated symbol combination includes K₁ modulated symbols.

FIG. 6 is a diagram of SCMA codebooks according to an embodiment of this application. Refer to FIG. 6. FIG. 6 includes six codebooks, respectively a codebook #1 to a codebook #6. For example, the codebook #1 indicates that the zeroth first resource and the second first resource are selected from four first resources. In some optional implementations, the codebook #1 to the codebook #6 correspond to different terminal devices. The codebook #1 is orthogonal to the codebook #2, the codebook #3 is orthogonal to the codebook #4, and the codebook #5 is orthogonal to the codebook #6.

The six codebooks in FIG. 6 may be used as an SCMA codebook set. That the first codebook is determined based on the SCMA codebook may include determining an SCMA codebook as the first codebook, for example, determining the codebook #1 as the first codebook.

According to the foregoing embodiment, the first codebook may be determined by using the SCMA codebook, and sparsity of first resources may be determined by adjusting SCMA sparsity, so that a code rate or a rate for sending data can be flexibly adjusted.

Optionally, in some other implementation scenarios of the foregoing embodiment, N₁ = K₁, and the first codebook includes at least two SCMA codebooks that are mutually orthogonal.

In other words, the first codebook may be obtained by combining or concatenating the at least two orthogonal SCMA codebooks. As described above, the "combining or concatenating" herein may also be understood as "simultaneously selecting". When the foregoing solution is applied, the communication apparatus may determine the first codebook in the foregoing solution, for example, determine that the first codebook is a codebook obtained by concatenating the codebook #1 and the codebook #2. Alternatively, the communication apparatus may not determine the first codebook, but select at least two mutually orthogonal SCMA codebooks simultaneously, for example, select the codebook #1 and the codebook #2 simultaneously.

For example, the first codebook may include the codebook #1 and the codebook #2 in FIG. 6. In this way, the first codebook corresponds to all first resources. It should be noted that the codebook indicates which first resources are selected, and also indicates modulation schemes corresponding to these first resources. Therefore, although the first codebook formed by concatenating the codebook #1 and the codebook #2 and the first codebook formed by concatenating the codebook #3 and the codebook #4 both correspond to all first resources, modulation schemes corresponding to the first resources may be different.

According to the foregoing solution, the first codebook includes a large quantity of first resources, thereby ensuring a data transmission bandwidth and increasing a data transmission rate.

Optionally, in some other implementation scenarios of the foregoing embodiment, S220 includes: obtaining an index of the first codebook; and determining the first codebook from a plurality of second codebooks based on the index of the first codebook.

Obtaining the index of the first codebook may include: The first apparatus determines the index of the first codebook. The first apparatus may determine the index of the first codebook in a predefined manner or based on a predefined rule.

Alternatively, obtaining the index of the first codebook may include: The first apparatus receives the index of the first codebook. The first apparatus may receive signaling. The signaling is for determining the index of the first codebook. In another example, the index of the first codebook may be predefined, for example, defined in a protocol or defined in another manner.

It may be understood that the first codebook may be determined by determining the index of the first codebook in the at least one second codebook.

For example, a codebook set may be represented by C, where $C = \left\{{C}_{0}^{□},…, {C}_{{N}_{1 , seq}^{□} - 1}^{□}\right\} , {C}_{q}^{□}$ is a q^{th} sequence in the codebook set or is a q^{th} second codebook in the plurality of second codebooks, and q = 0, ..., N_{1,seq}-1. N_{1,seq} represents a quantity of sequences included in the codebook set. Alternatively, N_{1,seq} represents a quantity of second codebooks. N_{1,seq} may be a positive integer.

The plurality of second codebooks may be understood as a codebook set. The codebook set may also be referred to as an index codebook set, a kernel or core codebook set, or the like. A name of the codebook set is not limited in this application. In some optional embodiments, determining the first codebook from the plurality of second codebooks may include: selecting one second codebook from the plurality of second codebooks as the first codebook. In some other optional embodiments, determining the first codebook from the plurality of second codebooks may include: determining the first codebook based on at least two of the plurality of second codebooks.

The second codebook may be predefined. A specific name of the second codebook is not limited in this application. The second codebook may be referred to as a kernel or core codebook, an index codebook, or the like. A name of the second codebook may be the same as or different from a name of the first codebook.

In some other optional implementations, S220 includes: obtaining an index of the first codebook; and determining the first codebook from at least one second codebook based on the index of the first codebook. In other words, a quantity of codebooks in the codebook set is not limited in embodiments of this application, and the codebook set may include one or more codebooks.

In an example, when the communication apparatus is a terminal device, obtaining the index of the first codebook may include: receiving the index of the first codebook from a network device. In another example, when the communication apparatus is a network device, obtaining the index of the first codebook may include: determining the index of the first codebook. In other words, the index of the first codebook may be configured by the network device.

In another example, the index of the first codebook may be predefined, for example, defined in a protocol or defined in another manner.

It may be understood that the first codebook may be determined by determining the index of the first codebook in the at least one second codebook.

Optionally, in some other implementation scenarios of the foregoing embodiment, the plurality of second codebooks are at least two SCMA codebooks that are mutually orthogonal.

In other words, K₁ first resources determined based on any two codebooks in the codebook set do not overlap. The codebook set may be a subset of the SCMA codebook set. For example, the plurality of second codebooks may be the codebook #5 and the codebook #6 in FIG. 6.

According to the foregoing solution, the plurality of second codebooks are mutually orthogonal. In this way, the plurality of second codebooks correspond to different first resources, resulting in good interference resistance for data transmission.

The codebook set may alternatively be determined based on different interference configurations, for example, as shown in Table 5.

**Table 5**

| Interference configuration | Codebook set |
|---|---|
| Interference configuration a | A codebook in a codebook set is obtained by combining *N_{cb}* SCMA codebooks in SCMA codebooks, the *N_{cb}* SCMA codebooks are orthogonal, and a quantity of first resources determined based on the *N_{cb}* SCMA codebooks is *N*₁ |
| Interference configuration b | A codebook set is a subset of an SCMA codebook set. Any two codebooks in a subset of the SCMA codebook set are orthogonal |
| Interference configuration c | A codebook set is an SCMA codebook set |

With reference to the foregoing embodiments, a sequence set may include N_{2,seq} sequences, and a codebook set may include N_{1,seq} codebooks. Therefore, N_{1,seq}×N_{2,seq} combinations may be obtained, and K₁×K₂ first resources determined based on each combination vary. Optionally, each combination may be allocated to one terminal device. Therefore, this application can support N_{1,seq}×N_{2,seq} terminal devices.

For example, assuming that the interference configuration c is applied to a codebook set, N₁ = 4, and K₁ = 2, the codebook set may include six codebooks. Assuming that the interference configuration 3 is applied to a sequence set, N₂ = 35, K₂ = 5, P = 7, and L = 1, the sequence set may include 49 sequences. In this way, a total of 294 terminal devices can be supported in the foregoing example.

In some optional implementations, the codebook set corresponds to the sequence set.

For example, interference configurations of the codebook set and the sequence set may be shown in Table 6. Different interference configurations may correspond to different N_{1,seq} and N_{2,seq} values.

**Table 6**

| Codebook set | Sequence set |
|---|---|
| Interference configuration b | Interference configuration 1 |
| Interference configuration c | Interference configuration 1 |
| Interference configuration a | Interference configuration 2 |
| Interference configuration a | Interference configuration 3 |
| Interference configuration b | Interference configuration 2 |
| Interference configuration c | Interference configuration 3 |
| Interference configuration c | Interference configuration 4 |
| Interference configuration c | Interference configuration 5 |

According to the foregoing solution, the interference configuration of the codebook set corresponds to the interference configuration of the sequence set. For an interference configuration combination formed by an interference configuration of a codebook set and an interference configuration of a sequence set, different interference configuration combinations may be designed to support different quantities of terminal devices, different sparsity, and different interference cases. In addition, different terminal devices may select different interference configuration combinations, so that non-orthogonal multiple access transmission is implemented between terminal devices with different rates and code rates, and interference between different terminal devices is controlled. For example, two terminal devices need to transmit data at different rates (or code rates). In this case, the two terminal devices may be allowed to correspond to a same N₁ value and different K₁ values of a first RU, and correspond to a same N₂ value and a same K₂ value of a same second RU. Then, the two terminal devices may determine different sequences by using a same sequence set corresponding to the second RU, and interference between sequences in the sequence set may be designed to control interference in data sent by the two terminal devices.

Optionally, in some other implementation scenarios of the foregoing embodiment, each of the K₁×K₂ first resources includes W resource elements, where S230 includes: sending the data by using K₁×K₂×W resource elements, where W is a positive integer.

Optionally, in some other implementation scenarios of the foregoing embodiment, the method 200 further includes: determining a first resource block group, where the first resource block group includes at least N₁×N₂×W resource elements, and N₁×N₂×W resource elements included in the N₁×N₂ first resources are in a one-to-one correspondence with N₁×N₂×W resource elements in the first resource block group.

A resource block group may include at least one resource block (resource block, RB), and the at least one resource block includes N₁×N₂×W resource elements. The resource element may be a sub-carrier. It should be noted that the at least one resource block may include only N₁×N₂×W resource elements, or may include more resource elements. In other words, the at least one resource block may include more than N₁×N₂×W resource elements.

In some optional embodiments, each first resource includes W resource elements. In this way, the W resource elements in the first resource are in a one-to-one correspondence with W resource elements in an RB.

The following describes an embodiment by using W = 1 as an example. However, this is not limited in this application. W may alternatively be a value greater than 1.

For example, the first resource block group may include ${N}_{RB}^{RBG}$ RBs, and N₁×N₂ sub-carriers included in a second RU may be in a one-to-one correspondence with N₁×N₂ sub-carriers in the ${N}_{RB}^{RBG}$ RBs. Further, the ${N}_{RB}^{RBG}$ RBs include ${N}_{SC , data}^{RBG}$ sub-carriers for data transmission, and the N₁×N₂ sub-carriers included in the second RU may be in a one-to-one correspondence with N₁×N₂ sub-carriers in the ${N}_{SC , data}^{RBG}$ sub-carriers for data transmission. ${N}_{SC , data}^{RBG} \geq {N}_{1} \times {N}_{2}$.

A correspondence between the N₁×N₂ sub-carriers included in the second RU and N₁×N₂ sub-carriers of at least one resource block may be determined based on a mapping sequence Mₘₐₚ. For example, the mapping sequence is represented as Mₘₐₚ, Mₘₐₚ includes N₁×N₂ elements, and a u^{th} sub-carrier in the N₁×N₂ sub-carriers included in the second RU corresponds to an Mₘₐₚ(u)^{th} sub-carrier in the ${N}_{SC , data}^{RBG}$ sub-carriers for data transmission, where u = 0, ..., N₁×N₂-1.

A correspondence between the first resource and the resource element in the RB may also be predefined. The N₁×N₂ sub-carriers included in the second RU may first correspond to some sub-carriers in the ${N}_{SC , data}^{RBG}$ sub-carriers for data transmission in ascending order of sub-carrier indexes, and then correspond to some other sub-carriers in the ${N}_{SC , data}^{RBG}$ sub-carriers for data transmission in ascending order of symbol indexes. Alternatively, the N₁×N₂ sub-carriers included in the second RU may first correspond to some sub-carriers in the ${N}_{SC , data}^{RBG}$ sub-carriers for data transmission in ascending order of symbol indexes, and then correspond to some other sub-carriers in the ${N}_{SC , data}^{RBG}$ sub-carriers for data transmission in ascending order of sub-carrier indexes.

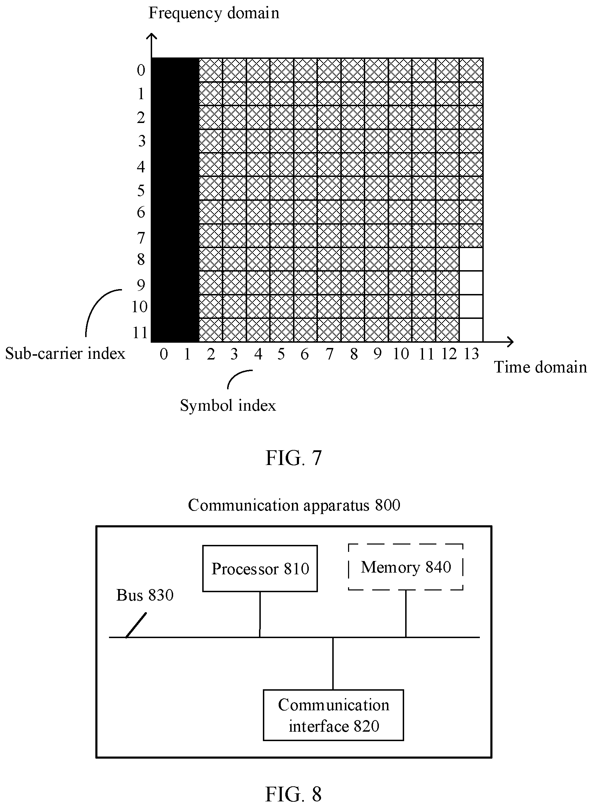

FIG. 7 is a diagram of a correspondence between a first resource and a resource element according to an embodiment of this application. Refer to FIG. 7. Assuming that N₁ = 4, N₂ = 35, and W = 1, the second RU may include 140 sub-carriers.

Assuming that ${N}_{RB}^{RBG} = 1$, the first resource block group includes only one RB. The RB includes 14 symbols, and each symbol includes 12 sub-carriers. If two symbols are for reference signal transmission, a quantity ${N}_{SC , data}^{RBG}$ of sub-carriers for data transmission is 144. A resource for reference signal transmission is indicated by a black-filled square. As shown in FIG. 7, 140 sub-carriers in the 144 sub-carriers are in a one-to-one correspondence with the 140 sub-carriers in the second RU (squares filled with patterns), and the last symbol and the last four sub-carriers in the 144 sub-carriers do not correspond to the sub-carriers in the second RU (squares filled with no pattern).

Optionally, one RB includes at least one time unit, and one time unit includes at least one RE. For example, in a long term evolution system, a time unit may be an orthogonal frequency division multiplexing (orthogonal frequency division multiplexing, OFDM) symbol or a single-carrier frequency-division multiple access (single-carrier frequency-division multiple access, SC-FDMA) symbol, one RB may include 14 symbols, one symbol may include 12 REs, and one RB may include 168 REs in total.

Optionally, the first resource block group may include a part of an RB. For example, the first resource block group may include 1/A RB, where A may be a predefined positive integer. In this case, a quantity of REs that may be included in a time unit changes to 1/A of the quantity of REs included in the time unit of the RB.

It is assumed that a bandwidth allocated to a terminal device is *N_{RB,TX}* RBs, where ${N}_{RB , TX} \geq {N}_{RB}^{RBG}$. When ${N}_{RB , TX} =$*N_{RB,TX}* ${N}_{RB}^{RBG}$, the bandwidth allocated by a system may be used as a resource block group. When ${N}_{RB , TX} > {N}_{RB}^{RBG}$*,* the bandwidth allocated by the system may be divided into at least two resource block groups. The terminal device sends or receives data on some or all sub-carriers in the *N_{RB,TX}* RBs. The terminal device may determine, based on the codebook and the sequence, a position of a sub-carrier for sending data in the *N_{RB,TX}* RBs.

*N_{RB,TX}* may be divided into a plurality of resource block groups, where each resource block group includes ${N}_{RB}^{RBG}$ RBs. For example, *N_{RB,TX}* may be divided into *Nᵣₐₜᵢₒ* groups. ${N}_{ratio} = {N}_{RB , TX} / {N}_{RB}^{RBG}$*. Nᵣₐₜᵢₒ* may be a positive integer, or may be another value. An example in which *Nᵣₐₜᵢₒ* is a positive integer is used below.

Optionally, when *N_{RB,TX}* may be divided into a plurality of resource block groups, the plurality of resource block groups may be considered as a plurality of first resource block groups. Each first resource block group may correspond to a different sequence set, and a sequence set corresponding to a first resource block group may be related to a position (that is, an index) of the first resource block group in the plurality of resource block groups. Each first resource block group may correspond to a different codebook set, and a codebook set and a sequence set that correspond to each first resource block group may be related to a position (that is, an index) of the first resource block group in the plurality of resource block groups.

In some optional implementations, each resource block group may correspond to a plurality of second sequences (or a sequence set) and a plurality of second codebooks (or a codebook set). A plurality of resource block groups may correspond to same N₂ second resources and N₁ first resources. A plurality of resource block groups may correspond to same first codebooks and different first sequences, or a plurality of resource block groups may correspond to different first codebooks and same first sequences. A plurality of resource block groups may correspond to different first codebooks and different first sequences, or a plurality of resource block groups may correspond to same first codebooks and same first sequences.

Optionally, in some other implementation scenarios of the foregoing embodiment, the plurality of second sequences are determined based on an index of the first resource block group, and the index of the first resource block group is for determining a position of the first resource block group in at least one resource block group. Optionally, the plurality of second codebooks are determined based on an index of the first resource block group, and the index of the first resource block group is for determining a position of the first resource block group in at least one resource block group.

Optionally, a bandwidth allocated to a terminal device, that is, *N_{RB,TX}* RBs, is the at least one resource block group.

The at least one resource block group may be a resource block group configured for data transmission, or the at least one resource block group may be a resource block group contained in a system.

In other words, the first resource block group may correspond to the plurality of second sequences. The first resource block group is any resource block group in the at least one resource block group.

For example, j_{b} represents an index of a resource block group, and the interference configuration 3 is used as an example. Then, the plurality of second sequences may be represented as: ${S}_{{i}_{1} P + {i}_{0}} \left(k\right) = kP + \left(\left(k+{j}_{b}\times {K}_{2}\right)\times {i}_{1}+{i}_{0}\right) mod P ; {i}_{1} , {i}_{0} = 0 , 1 , … , P - 1 ; k = 0 , 1 , … , {K}_{2} - 1 ;$ or satisfy: ${S}_{{i}_{1} P + {i}_{0}} \left(k\right) = kP + \left(\left(k+{j}_{b}\times {K}_{2}\right)\times {i}_{1}+{i}_{0}+{Δ}_{3}\right) mod P ; {i}_{1} , {i}_{0} = 0 , 1 , … , P - 1 ; k = 0 , 1 , … , {K}_{2} - 1 .$

Δ₃ is an offset, Δ₃ is an integer, and Δ₃ may be predefined or indicated by signaling.

When ${N}_{RB}^{RBG} = 1$, the index of the resource block group may be considered as an index of an RB.

According to the foregoing embodiment, a sequence corresponding to a resource block group may be related to an index of the resource block group, and a same index of a first sequence may be selected for each resource block group. It may be understood that different resource block groups may correspond to different codebook sets, and different resource block groups may correspond to different sequence sets. Compared with a case in which a same codebook set and a same sequence set are used for each resource block group, a case in which a codebook set and a sequence set are designed for each resource block group can reduce interference between different terminal devices during data transmission.

Optionally, a plurality of resource block groups may correspond to a same sequence set (a plurality of second sequences), and the plurality of resource block groups may correspond to different first sequences. Specifically, an index of a first sequence may be related to an index of a resource block group.

Optionally, a plurality of resource block groups may correspond to a same codebook set (a plurality of second codebooks), and the plurality of resource block groups may correspond to different first codebooks. Specifically, an index of a first codebook may be related to an index of a resource block group.

Optionally, in some other implementation scenarios of the foregoing embodiment, the at least one resource block group includes all resource blocks allocated to one terminal device, or the at least one resource block group includes all resource blocks allocated to a plurality of terminal devices. The terminal device is one of the plurality of terminal devices, and the terminal device is a receiving side or a transmitting side of the data.

In other words, an index of a resource block group may be a relative index, for example, an index in *N_{RB,TX}* allocated RBs. An index of a resource block group may be an absolute index, for example, an index in a plurality of sub-blocks formed based on *N_{sys}* RBs included in a system bandwidth, where each sub-block includes ${N}_{RB}^{RBG}$ RBs. The *N_{RB,TX}* RBs allocated to the terminal device may be some or all of the *N_{sys}* RBs included in the system bandwidth.

Optionally, at least one resource block group is a resource block group contained in a system, the resource block group included in the system may be a resource block group configured for a cell, and the first apparatus is located in the cell.

Optionally, a resource element included in at least one resource block group (resource block group, RBG) is a resource element included in a system, the resource element included in the system may be a resource element configured for a cell, and the first apparatus is located in the cell. The resource element configured for a cell may be a resource element included in a time unit (for example, an OFDM symbol).

Optionally, a quantity of resource elements configured for a cell may be a number of points in inverse discrete Fourier transform.

For example, in a long term evolution system, if a sub-carrier spacing configured for a cell is 15 kHz, and a quantity of resource elements included in a symbol is 1024 (that is, a number of points in inverse discrete Fourier transform is 1024), at least one RBG includes 1024 resource elements.

Optionally, the at least one RBG is a maximum quantity of resource block groups that can be configured for data transmission, or a resource element included in the at least one RBG is a maximum quantity of resource elements that can be configured for data transmission. The maximum quantity of resource block groups that can be configured for data transmission correspond to one time unit.

The maximum quantity of resource block groups that can be configured for data transmission may be a maximum quantity of resource blocks that can be used by a device in a cell during data transmission. The maximum quantity of resource elements that can be configured for data transmission may be a maximum quantity of resource elements that can be used by a device in a cell during data transmission.

For example, in a long term evolution system, if a sub-carrier spacing configured for a cell is 15 kHz, a quantity of resource elements included in a symbol is 1024 (that is, a number of points in inverse discrete Fourier transform is 1024), and a maximum quantity of resource elements that can be configured for data transmission in a symbol is 600, at least one RBG includes 600 resource elements.

Optionally, the at least one RBG is an RBG included in a bandwidth part.

Optionally, an RE included in the at least one RBG is an RE included in a bandwidth part (bandwidth part, BWP). The bandwidth part may correspond to the first apparatus, and the bandwidth part may be predefined or may be indicated based on signaling. This is not limited in this application.

The following describes apparatus embodiments corresponding to the method embodiments of this application. The following merely briefly describes apparatuses. For specific implementation steps and details of the solutions, refer to the foregoing method embodiments.

To implement functions in the method provided in this application, a communication apparatus may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 8 is a block diagram of a communication apparatus 800 according to an embodiment of this application. The communication apparatus 800 includes a processor 810 and a communication interface 820. The processor 810 and the communication interface 820 may be connected to each other through a bus 830. The communication apparatus 800 may be a core network device, or may be an access network device, or may be a terminal device.

Optionally, the communication apparatus 800 may further include a memory 840. The memory 840 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 840 is configured to store related instructions and data. The memory 840 and the processor 810 may be integrated together or separately disposed.

The processor 810 may be one or more central processing units (central processing unit, CPU). When the processor 810 is one CPU, the CPU may be a single-core CPU, or may be a multi-core CPU. The processor 810 may be a signal processor, a chip, another integrated circuit that can implement the methods in this application, or a part of circuits that are in the foregoing processor, chip, or integrated circuit and that are configured to perform a processing function. In addition, the communication interface 820 may alternatively be an input/output interface. The input/output interface is configured to input or output a signal or data, or may be an input/output circuit.

For example, the processor 810 is configured to perform the following operation: obtaining a first sequence and a first codebook.

The content is merely used as an example for description. The communication apparatus 800 is responsible for performing related methods or steps in the foregoing method embodiments.

It may be understood that the communication interface 820 may also be referred to as a transceiver. The transceiver may include a transmitter and a receiver. The transmitter is configured to perform a sending operation, and the receiver is configured to perform a receiving operation. For example, the processor 810 is configured to control the transceiver to receive and/or send a signal.

It should be noted that the communication apparatus 800 may include the transmitter but not include the receiver. Alternatively, the communication apparatus 800 may include the receiver but not include the transmitter. This may be specifically determined depending on whether the foregoing solution performed by the communication apparatus 800 includes a sending action and a receiving action.

The description is merely an example for description. For specific content, refer to content in the method embodiments. For an implementation of the operations in FIG. 8, refer to the corresponding descriptions of the method embodiments shown in FIG. 2 to FIG. 7.

For example, the communication apparatus 800 may be configured to perform the solutions shown in FIG. 2 to FIG. 7.

The communication interface 820 may be configured to transmit data by using the K₁×K₂ first resources.

For details of other implementations, refer to the detailed descriptions of the embodiments shown in FIG. 2 to FIG. 7. Details are not described herein again. It should be understood that a specific process in which the components perform the foregoing corresponding processes has been described in detail in the foregoing method embodiments. For brevity, details are not described herein again.

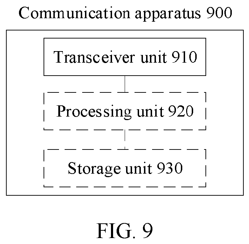

FIG. 9 is a block diagram of another communication apparatus 900 according to an embodiment of this application. The communication apparatus 900 may be a terminal device, a core network device, or an access network device, or may be a chip or a module in a terminal device, a core network device, or an access network device, and is configured to implement the methods in the embodiments shown in FIG. 2 to FIG. 7. For details, refer to related descriptions in the foregoing method embodiments.

The communication apparatus 900 includes a transceiver unit 910. The following describes the transceiver unit 910 by using an example.

The transceiver unit 910 may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. This applies throughout and will not be repeated below. The transceiver unit 910 may implement a corresponding communication function. The transceiver unit 910 may also be referred to as a communication interface or a communication module.

It should be noted that the communication apparatus 900 may include the sending unit but not include the receiving unit. Alternatively, the communication apparatus 900 may include the receiving unit but not include the sending unit. This may be specifically determined depending on whether the foregoing solution performed by the communication apparatus 900 includes a sending action and a receiving action.

For example, the transceiver unit 910 is configured to transmit data by using the K₁×K₂ first resources.

Optionally, the communication apparatus 900 may further include a processing unit 920 configured to perform content related to steps such as processing and coordination of the communication apparatus 900.

The content is merely used as an example for description. The communication apparatus 900 is responsible for performing related methods or steps in the foregoing method embodiments.

Optionally, the communication apparatus 900 further includes a storage unit 930, and the storage unit 930 is configured to store a program or code for performing the foregoing methods. In other words, the storage unit 930 may be configured to store instructions and/or data, and the processing unit 920 may read the instructions and/or the data in the storage unit 930, to enable the communication apparatus 900 to implement the foregoing method embodiments. For example, the communication apparatus 900 may be configured to perform the solutions shown in FIG. 2 to FIG. 7.

The processing unit 920 may be configured to obtain a first sequence, where the first sequence is for determining K₂ second resources from N₂ second resources, N₂ is a positive integer greater than or equal to K₂, each second resource corresponds to N₁ first resources, and K₂ is a positive integer; and configured to obtain a first codebook, where the first codebook is for determining K₁×K₂ first resources from N₁×N₂ first resources, N₁ is a positive integer greater than or equal to K₁, the N₁×N₂ first resources are resources configured for data transmission, and K₁ is a positive integer. The transceiver unit 910 may be configured to transmit data by using the K₁×K₂ first resources.

For details of other implementations, refer to the detailed descriptions of the embodiments shown in FIG. 2 to FIG. 7. Details are not described herein again. It should be understood that a specific process in which the components perform the foregoing corresponding processes has been described in detail in the foregoing method embodiments. For brevity, details are not described herein again.

The apparatus embodiments shown in FIG. 8 and FIG. 9 are used for implementing the content described in FIG. 2 to FIG. 7. For specific execution steps and methods of the apparatuses shown in FIG. 8 and FIG. 9, refer to the content described in the foregoing method embodiments.

This application further provides a communication apparatus including a processor and a memory. The memory is configured to store instructions, and the processor is configured to call and run the instructions stored in the memory, to enable the communication apparatus to perform the methods in the foregoing embodiments.

This application further provides a chip including a processor configured to call instructions from a memory and run the instructions stored in the memory, to enable a communication apparatus in which the chip is mounted to perform the methods in the foregoing embodiments.

This application further provides another chip including an input interface, an output interface, and a processor. The input interface, the output interface, and the processor are connected to each other through an internal connection path. The processor is configured to execute code in a memory. When the code is executed, the processor is configured to perform the methods in the foregoing embodiments. Optionally, the chip further includes the memory. The memory is configured to store a computer program or code.

This application further provides a processor configured to be coupled to a memory and configured to perform the method and function of the communication apparatus in any one of the foregoing embodiments.

Another embodiment of this application provides a computer program product including a computer program or instructions. When the computer program product is run on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such understanding, the technical solutions in this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining a first sequence, wherein the first sequence is for determining K₂ second resources from N₂ second resources, N₂ is a positive integer greater than or equal to K₂, each second resource corresponds to N₁ first resources, and K₂ is a positive integer;
obtaining a first codebook, wherein the first codebook is for determining K₁×K₂ first resources from N₁×N₂ first resources, N₁ is a positive integer greater than or equal to K₁, the N₁×N₂ first resources are resources configured for data transmission, and K₁ is a positive integer; and
transmitting data by using the K₁×K₂ first resources.

2. The method according to claim 1, wherein the first codebook is for determining K₁ first resources from N₁ first resources corresponding to each second resource.

3. The method according to claim 1 or 2, wherein the N₂ second resources comprise K₂ resource groups, and each of the K₂ resource groups comprises a same quantity of second resources or a different quantity of second resources, wherein the first sequence is for determining the K₂ second resources respectively from the K₂ resource groups.

4. The method according to any one of claims 1 to 3, wherein N₂ = K₂, the first sequence comprises N₂ elements, and the N₂ elements respectively correspond to the N₂ second resources.

5. The method according to any one of claims 1 to 4, wherein the obtaining the first sequence comprises:
obtaining an index of the first sequence; and
determining the first sequence from a plurality of second sequences based on the index of the first sequence.

6. The method according to claim 5, wherein a quantity of same elements in any two of the plurality of second sequences is less than or equal to L, 0 ≤ L < K₂, and L is an integer.

7. The method according to claim 5 or 6, wherein the first sequence comprises at least two of the plurality of second sequences.

8. The method according to any one of claims 5 to 7, wherein the plurality of second sequences satisfy: ${S}_{j} \left(k\right) = kP + \left({\sum }_{l = 0}^{L} {k}^{l} {i}_{l}\right) mod P ; {i}_{l} = 0 , 1 , … , P - 1 ; k = 0 , 1 , … , {K}_{2} - 1 ,$ wherein $j = {\sum }_{l = 0}^{L} {P}^{l} {i}_{l}$*,* P = N₂/K₂, P is a positive integer, Sⱼ(k) represents a k^{th} element in a j^{th} second sequence of the plurality of second sequences, 0 ≤ L < K₂, and L is an integer.

9. The method according to any one of claims 5 to 7, wherein the plurality of second sequences satisfy: ${S}_{j} \left(k\right) = {\sum }_{p = - 1}^{k - 1} {P}_{p} + \left({\sum }_{l = 0}^{L} {k}^{l} {i}_{l}\right) mod {P}_{k} ; {i}_{l} = 0 , 1 , … , {P}_{l} - 1 ; k = 0 , 1 , … , {K}_{2} - 1 ,$ wherein $j = {i}_{0} + {\sum }_{w = 1}^{L} \left({i}_{w}{\prod }_{p = 0}^{w - 1} {P}_{p}\right) , {N}_{2} = {\sum }_{k = 0}^{{K}_{2} - 1} {P}_{k}$, Pk is a positive integer, Sⱼ(k) represents a k^{th} element in a j^{th} second sequence of the plurality of second sequences, 0 ≤ L < K₂, and L is an integer.

10. The method according to claim 9, wherein N₂ is related to a value of Pₖ, and Pₖ is for determining a quantity of second resources in each of the K₂ resource groups.

11. The method according to any one of claims 1 to 10, wherein N₂ is related to a value of K₂.

12. The method according to any one of claims 1 to 11, wherein the first codebook is determined based on a sparse code multiple access SCMA codebook.

13. The method according to claim 12, wherein N₁ = K₁, and the first codebook comprises at least two SCMA codebooks that are mutually orthogonal.

14. The method according to any one of claims 1 to 13, wherein the obtaining the first codebook comprises:
obtaining an index of the first codebook; and
determining the first codebook from a plurality of second codebooks based on the index of the first codebook.

15. The method according to claim 14, wherein the plurality of second codebooks are at least two SCMA codebooks that are mutually orthogonal.

16. The method according to any one of claims 1 to 15, wherein each of the K₁×K₂ first resources comprises W resource elements, wherein the transmitting the data by using the K₁×K₂ first resources comprises:
sending the data by using K₁×K₂×W resource elements, wherein W is a positive integer.

17. The method according to any one of claims 1 to 16, further comprising:
determining a first resource block group, wherein the first resource block group comprises at least N₁×N₂×W resource elements, and N₁×N₂×W resource elements comprised in the N₁×N₂ first resources are in a one-to-one correspondence with N₁×N₂×W resource elements in the first resource block group.

18. The method according to claim 17, wherein the plurality of second sequences are determined based on an index of the first resource block group, and the index of the first resource block group is for determining a position of the first resource block group in at least one resource block group; and
the at least one resource block group is a resource block group configured for data transmission, or the at least one resource block group is a resource block group contained in a system.

19. The method according to claim 17, wherein the plurality of second codebooks are determined based on an index of the first resource block group, and the index of the first resource block group is for determining a position of the first resource block group in at least one resource block group; and
the at least one resource block group is a resource block group configured for data transmission, or the at least one resource block group is a resource block group contained in a system.

20. A communication apparatus, comprising a processing circuit and an input/output interface, wherein the input/output interface is configured to input and/or output a signal, and the processing circuit is configured to perform the method according to any one of claims 1 to 19.

21. A communication apparatus, comprising a processor and a memory, wherein the memory stores a computer program or instructions, and the processor is configured to execute the computer program or the instructions, to enable the communication apparatus to perform the method according to any one of claims 1 to 19.

22. A computer-readable storage medium, wherein the computer-readable storage medium stores a computer program or instructions, and when the computer program or the instructions are run on a computer, the method according to any one of claims 1 to 19 is performed.

23. A computer program product, comprising computer program code, wherein when the computer program code is run, the method according to any one of claims 1 to 19 is implemented.

24. A communication apparatus, wherein the communication apparatus comprises a processing unit and a transceiver unit, wherein
the processing unit is configured to obtain a first sequence, wherein the first sequence is for determining K₂ second resources from N₂ second resources, N₂ is a positive integer greater than or equal to K₂, each second resource corresponds to N₁ first resources, and K₂ is a positive integer;
the processing unit is further configured to obtain a first codebook, wherein the first codebook is for determining K₁×K₂ first resources from N₁×N₂ first resources, N₁ is a positive integer greater than or equal to K₁, the N₁×N₂ first resources are resources configured for data transmission, and K₁ is a positive integer; and
the transceiver unit is configured to transmit data by using the K₁×K₂ first resources.

25. The communication apparatus according to claim 24, wherein the first codebook is for determining K₁ first resources from N₁ first resources corresponding to each second resource.

26. The communication apparatus according to claim 24 or 25, wherein the N₂ second resources comprise K₂ resource groups, and each of the K₂ resource groups comprises a same quantity of second resources or a different quantity of second resources, wherein the first sequence is for determining the K₂ second resources respectively from the K₂ resource groups.

27. The communication apparatus according to any one of claims 24 to 26, wherein N₂ = K₂, the first sequence comprises N₂ elements, and the N₂ elements respectively correspond to the N₂ second resources.

28. The communication apparatus according to any one of claims 24 to 27, wherein the processing unit is specifically configured to:
obtain an index of the first sequence; and
determine the first sequence from a plurality of second sequences based on the index of the first sequence.

29. The communication apparatus according to claim 28, wherein a quantity of same elements in any two of the plurality of second sequences is less than or equal to L, 0 ≤ L < K₂, and L is an integer.

30. The communication apparatus according to claim 28 or 29, wherein the first sequence comprises at least two of the plurality of second sequences.

31. The communication apparatus according to any one of claims 28 to 30, wherein the plurality of second sequences satisfy: ${S}_{j} \left(k\right) = kP + \left({\sum }_{l = 0}^{L} {k}^{l} {i}_{l}\right) mod P ; {i}_{l} = 0 , 1 , … , P - 1 ; k = 0 , 1 , … , {K}_{2} - 1 ,$ wherein $j = {\sum }_{l = 0}^{L} {P}^{l} {i}_{l}$*,* P = N₂/K₂, P is a positive integer, Sⱼ(k) represents a k^{th} element in a j^{th} second sequence of the plurality of second sequences, 0 ≤ L < K₂, and L is an integer.

32. The communication apparatus according to any one of claims 28 to 30, wherein the plurality of second sequences satisfy: ${S}_{j} \left(k\right) = {\sum }_{p = - 1}^{k - 1} {P}_{p} + \left({\sum }_{l = 0}^{L} {k}^{l} {i}_{l}\right) mod {P}_{k} ; {i}_{l} = 0 , 1 , … , {P}_{l} - 1 ; k = 0 , 1 , … , {K}_{2} - 1 ,$ wherein $j = {i}_{0} + {\sum }_{w = 1}^{L} \left({i}_{w} {\prod }_{p = 0}^{w - 1} {P}_{p}\right) , {N}_{2} = {\sum }_{k = 0}^{{K}_{2} - 1} {P}_{k}$, Pₖ is a positive integer, Sⱼ(k) represents a k^{th} element in a j^{th} second sequence of the plurality of second sequences, 0 ≤ L < K₂, and L is an integer.

33. The communication apparatus according to claim 32, wherein N₂ is related to a value of Pₖ, and Pₖ is for determining a quantity of second resources in each of the K₂ resource groups.

34. The communication apparatus according to any one of claims 24 to 33, wherein N₂ is related to a value of K₂.

35. The communication apparatus according to any one of claims 24 to 34, wherein the first codebook is determined based on a sparse code multiple access SCMAcodebook.

36. The communication apparatus according to claim 35, wherein N₁ = K₁, and the first codebook comprises at least two SCMA codebooks that are mutually orthogonal.

37. The communication apparatus according to any one of claims 24 to 36, wherein the processing unit is specifically configured to:
obtain an index of the first codebook; and
determine the first codebook from a plurality of second codebooks based on the index of the first codebook.

38. The communication apparatus according to claim 37, wherein the plurality of second codebooks are at least two SCMA codebooks that are mutually orthogonal.

39. The communication apparatus according to any one of claims 24 to 38, wherein each of the K₁×K₂ first resources comprises W resource elements, wherein the transceiver unit is specifically configured to:
send the data by using K₁×K₂×W resource elements, wherein W is a positive integer.

40. The communication apparatus according to any one of claims 24 to 39, wherein
the processing unit is further configured to determine a first resource block group, wherein the first resource block group comprises at least N₁×N₂×W resource elements, and N₁×N₂×W resource elements comprised in the N₁×N₂ first resources are in a one-to-one correspondence with N₁×N₂×W resource elements in the first resource block group.

41. The communication apparatus according to claim 40, wherein the plurality of second sequences are determined based on an index of the first resource block group, and the index of the first resource block group is for determining a position of the first resource block group in at least one resource block group; and
the at least one resource block group is a resource block group configured for data transmission, or the at least one resource block group is a resource block group contained in a system.

42. The communication apparatus according to claim 40, wherein the plurality of second codebooks are determined based on an index of the first resource block group, and the index of the first resource block group is for determining a position of the first resource block group in at least one resource block group; and
the at least one resource block group is a resource block group configured for data transmission, or the at least one resource block group is a resource block group contained in a system.
